(19) Europäisches Patentamt
European Patent Office
Office européen des brevets

(11) EP 2 629 165 A2

(12) **EUROPEAN PATENT APPLICATION**

(43) Date of publication:
**21.08.2013 Bulletin 2013/34**

(51) Int Cl.:
***G05B 23/02*** *(2006.01)*

(21) Application number: **13154903.2**

(22) Date of filing: **12.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.02.2012 JP 2012029327**

(71) Applicant: **OMRON CORPORATION**
**Kyoto-shi, Kyoto 600-8530 (JP)**

(72) Inventors:
- **Yachiku, Hideki**
  **Kyoto 600-8530 (JP)**
- **Hattori, Reiko**
  **Kyoto 600-8530 (JP)**

(74) Representative: **Horn Kleimann Waitzhofer**
**Elsenheimerstraße 65**
**DE-80687 München (DE)**

(54) **System monitoring apparatus and control method thereof**

(57) This invention provides a system monitoring apparatus that can provide a guide to reduction of energy consumption in a system and a method for controlling the system monitoring apparatus. The system monitoring apparatus (100) comprises: an acquisition part (101); an allowance degree calculator (102) that calculates an allowance degree for a reference value, which guarantees the production quality with respect to the status data; a room-for-energy-reduction extractor (103) that extracts room for energy reduction of the instrument from the allowance degree; and a display part (104) that displays the room for energy reduction. A screen illustrates information on the energy consumption in the production system before an energy saving measure. An upper graph of the screen illustrates a time change of electricity usage of a heater. A lower graph of the screen illustrates a time change of status data of the heater. In the lower graph, a difference between the status data and a lower limit is illustrated as extra energy.

*FIG. 7*

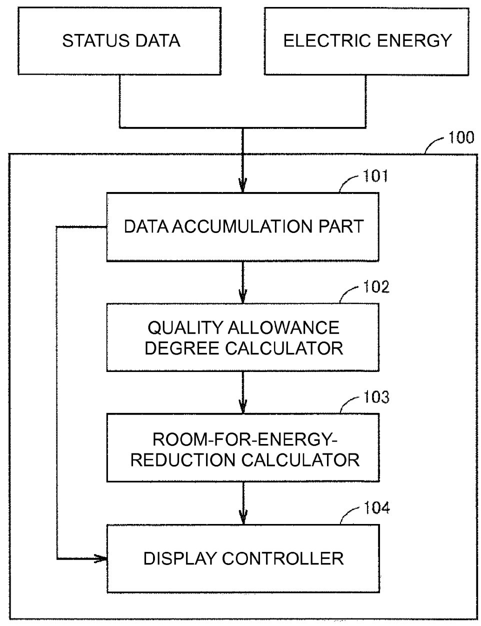


EP 2 629 165 A2

## Description

1. TECHNICAL FIELD

The present invention relates to a system monitoring apparatus and a control method thereof, particularly to a system monitoring apparatus that reduces energy consumption in a product producing system and a method for controlling the system monitoring apparatus.

2. RELATED ART

Conventionally, there have been various studies on reduction of energy consumption in a system that produces a product.

For example, the current energy consumption amount is presented to raise awareness of the reduction.

In a technology disclosed in Japanese Unexamined Patent Publication No. 2008-102708, a base line is set to an energy consumption amount in each short period, such as one day, based on an energy saving target value and a past energy actual value in a long period, such as one month, and an actual value of the energy reduction is calculated and displayed in each short period based on the base line.

Japanese Unexamined Patent Publication No. 2010-250381 discloses an energy monitoring apparatus that calculates room for improvement in an energy power consumption amount consumed by a processing machine. In the energy monitoring apparatus, the power consumption amount consumed by the processing machine is measured in real time, the power consumption amount is divided into an added-value generating portion and a non-added value portion, and an integration value of the electric power in the non-added value portion is calculated as a room-for-improvement amount.

In the case that a measure to reduce the energy consumption amount is studied based only on the current energy consumption amount, usually the reduction is studied from a point having the largest total energy consumption amount in the system. However, the point having the largest total energy consumption amount is not always the point in which the energy consumption amount should be reduced.

In the technology disclosed in Japanese Unexamined Patent Publication No. 2008-102708, a reduction target and a measured value are simply presented, but an item that constitutes a guide in the energy reduction is not presented.

In the technology disclosed in Japanese Unexamined Patent Publication No. 2010-250381, although a quantity having room for energy reduction can be set to an evaluation target, the item that constitutes the guide in the energy reduction is not presented.

The present invention has been devised to solve the problems described above, and an object thereof is to provide a system monitoring apparatus that provides the guide to reduce the energy consumption in the system and a method for controlling the system monitoring apparatus.

SUMMARY

In accordance with a first aspect of the present invention, a system monitoring apparatus is used for an operation of an instrument, the instrument consuming energy to adjust a state of a production system based on status data, the status data indicating a state that affects production quality of a product produced by the production system. The system monitoring apparatus includes: an acquisition part that continuously acquires the status data; an allowance degree calculator that calculates an allowance degree for a reference value, which guarantees the production quality with respect to the status data, of a moving average value of the continuously-acquired pieces of status data based on the moving average value and the reference value; a room-for-energy-reduction extractor that extracts room for energy reduction of the instrument from the allowance degree; and a display part that displays the room for energy reduction.

Preferably the allowance degree calculator extracts a difference between a value, which is calculated from the moving average value and a moving deviation of the continuous pieces of status data, and the reference value as the allowance degree.

Preferably the room-for-energy-reduction extractor calculates the room for energy reduction for a certain period of time, and the display part displays a graph or a table of the room for energy reduction.

Preferably the acquisition part is placed in each region or each process, and acquires the status data of each region or each process, the room-for-energy-reduction extractor extracts the room for energy reduction from the status data of each region or each process, and the display part displays the room for energy reduction together with a figure of the region or the process.

Preferably the room-for-energy-reduction extractor extracts the room for energy reduction by performing a time integration of the allowance degree that is of the difference between the status data and the reference value.

Preferably the system monitoring apparatus further includes a controller that controls the operation of the instrument such that the status data falls within a range of the reference value.

In accordance with a second aspect of the present invention, a system monitoring apparatus is used for an operation of an instrument, the instrument consuming energy to adjust a state of a production system based on status data, the status data being output from a sensor that measures a state affecting production quality of the production system. The system monitoring apparatus includes: a reception part that continuously receives the status data; an allowance degree calculator that calculates an allowance degree for a reference value, which guarantees the production quality with respect to the status data, of a moving average value based on the moving average value of the pieces of status data continuously acquired by the reception part and the reference value; a room-for-energy-reduction extractor that extracts room for energy reduction of the instrument from the allowance degree; and a display part that displays the room for energy reduction.

In accordance with a third aspect of the present invention, a system monitoring apparatus controlling method is a method for controlling an operation of a system monitoring apparatus that is used for an operation of an instrument, the instrument consuming energy to adjust a state of a production system based on status data, the status data being output from a sensor that measures a state affecting production quality of the production system. In the method, the system monitoring apparatus receives continuously the status data and stores the continuous pieces of status data in a memory; calculates a moving average value from the continuous pieces of status data stored in the memory; calculates an allowance degree for a reference value, which guarantees the production quality with respect to the status data, of the moving average value based on the moving average value and the reference value; extracts room for energy reduction of the instrument from the allowance degree; and displays the room for energy reduction on a display part.

In accordance with a fourth aspect of the present invention, a system monitoring apparatus is used for an operation of a filter fan, the filter fan consuming energy to adjust an air cleanliness class of a clean room based on the air cleanliness class, the air cleanliness class indicating a state that affects production quality of a product produced in the clean room. The system monitoring apparatus includes: a particle sensor that continuously acquires the air cleanliness class; an allowance degree calculator that calculates an allowance degree for a reference value, which guarantees the production quality with respect to the air cleanliness class, of a moving average value of the continuously-acquired air cleanliness classes based on the moving average value and the reference value; a room-for-energy-reduction extractor that extracts room for energy reduction of the filter fan from the allowance degree; and a display part that displays the room for energy reduction.

In accordance with a fifth aspect of the present invention, a system monitoring apparatus is used for an operation of a heater, the heater consuming energy to adjust a temperature in a furnace based on the temperatures, the temperature indicating a state that affects production quality of a product produced in the furnace. The system monitoring apparatus includes: a temperature sensor that continuously acquires the temperature; an allowance degree calculator that calculates an allowance degree for a reference value, which guarantees the production quality with respect to the temperature, of a moving average value of the continuously-acquired temperatures based on the moving average value and the reference value; a room-for-energy-reduction extractor that extracts room for energy reduction of the heater from the allowance degree; and a display part that displays the room for energy reduction.

According to the present invention, in the system monitoring apparatus used for the operation of the instrument, which consumes the energy to adjust the state of the production system based on the status data indicating the state that affects the production quality of the product produced by the production system, the pieces of status data are continuously acquired, and the moving average value of the continuously-acquired pieces of status data is calculated. The allowance degree for the reference value, which guarantees the production quality with respect to the status data, of the calculated moving average value is calculated. The room for energy reduction of the instrument is extracted from the allowance degree and displayed.

Therefore, the guide to reduce the energy consumption is provided based on the state of the production system.

## BRIEF DESCRIPTION OF THE DRAWINGS

FIG. 1 is a view schematically illustrating an example of a configuration of a production system;
FIG. 2 is a view illustrating a content of information presented about the production system in FIG. 1;
FIG. 3 is a view illustrating a modification of the content in FIG. 2;
FIG. 4 is a view schematically illustrating another example of the configuration of the production system;
FIG. 5 is a view illustrating a content of information presented about the production system in FIG. 4;
FIG. 6 is a view schematically illustrating a hardware configuration of a controller;
FIG. 7 is a view schematically illustrating a functional configuration of the controller;
FIG. 8 is a flowchart of processing performed by the controller;
FIG. 9 is a view illustrating an example of display performed by the controller;

FIG. 10 is a view illustrating an example of display in which room for energy reduction of each indoor device is displayed together with a layout of indoor devices;

FIGS. 11A to 11C are views illustrating an example of display including at least two modes with respect to a detection output of a particle sensor;

FIG. 12 is a view illustrating an example of display of a detection result on one day with respect to the detection output of the particle sensor;

FIG. 13 is a view illustrating an example of the display of the detection result on one day with respect to the detection output of the particle sensor;

FIG. 14 is a view illustrating an example of the display of the detection result on one day with respect to the detection output of the particle sensor;

FIG. 15 is a view illustrating an example of the display of the detection result on plural days with respect to the detection output of the particle sensor;

FIG. 16 is a view schematically illustrating another example of the functional configuration of the controller;

FIG. 17 is a view schematically illustrating examples of status data and a prediction range in the production system;

FIGS. 18A to 18C are views schematically illustrating a moving average, an upper-limit predicted value, and a lower-limit predicted value at each of clock times T1, T2, and T3 in FIG. 17;

FIG. 19 is a view illustrating a change in prediction range in FIG. 17;

FIG. 20 is a view illustrating an example of calculation results of the room for energy reduction and the like;

FIG. 21 is a view illustrating another example of the calculation results of the room for energy reduction and the like;

FIG. 22 is a view illustrating a display example of the calculation results of the room for energy reduction in plural systems;

FIG. 23 is a view illustrating an example of information in each post-improvement system; and

FIG. 24 is a view illustrating another example of information in each post-improvement system.

## DETAILED DESCRIPTION

Hereinafter, embodiments of heating furnaces of the present invention will be described with reference to the drawings. In the drawings, the same component is designated by the same numeral, and the detailed description is not repeated.

### [First Embodiment]

### <System Configuration (1)>

FIG. 1 is a view schematically illustrating an example of a configuration of a production system according to a first embodiment.

Referring to FIG. 1, the production system includes a reflow furnace 700, and air in the reflow furnace 700 is heated by a heater 702. A controller 100 decides a control content of the heater 702 based on a detection output of a temperature sensor 701 that detects a temperature in the reflow furnace 700. The controller 100 controls the output of the heater 702 through a manipulator 750.

In the first embodiment, the controller 100 is connected to a monitor 111, and the controller 100 allows the monitor 111 to display a detection temperature input from the temperature sensor 701.

FIG. 2 is a view illustrating a content of information presented about the production system in FIG. 1.

The controller 100 provides information for reducing (hereinafter referred to as "energy saving") uselessness of an energy consumption amount in the production system.

A screen 801 and a screen 802 are illustrated in FIG. 2.

The screen 801 illustrates information on energy consumption in the production system before an energy saving measure. Specifically, two graphs are illustrated on the screen 801. The upper graph illustrates a time change in electricity usage of the heater 702. The lower graph illustrates a time change of status data of the heater 702.

As used herein, the "status data" means data indicating a state that affects quality of the product produced by the production system. In the production system in FIG. 1, the temperature in the reflow furnace 700 is adopted as an example of the status data in control of a reflow process that is one of processes of producing a board. The temperature in the reflow furnace 700 is a parameter that affects quality of a solder joint in the board that is an example of the product. In the production system in FIG. 1, an upper limit and a lower limit of the temperature are fixed, and an operation of the heater 702 is controlled such that the temperature is maintained within the range between the upper limit and the lower limit.

An electric power is properly supplied to the heater 702 as illustrated in the upper stage on the screen 801 in FIG. 2, whereby the temperature in the reflow furnace 700 changes within the range (reference range) between the upper limit and the lower limit as illustrated in the lower stage on the screen 801.

In the lower stage on the screen 801, an integral value (region) of a difference between the measured value and the lower limit is hatched as extra energy. The extra energy will be described below.

In the production system in FIG. 1, the reference range is considerably higher than room temperature. Accordingly, in the production system in FIG. 1, it is necessary to increase the temperature in the reflow furnace 700 with the heater 702 in order to maintain the status data within the reference range.

In order that the electric energy supplied to the heater 702 is suppressed to the minimum to position the status data within the reference range, the electric power may be supplied to the heater 702 such that the status data is maintained while agreeing with the lower limit. In the case that the status data is higher than the lower limit, it can be said that the difference between the status data and the lower limit is a temperature increase due to the supply of the extra electric power to the heater 702. From this viewpoint, the integral value of the difference between the status data and the lower limit is illustrated as the temperature increase due to the extra energy in the lower stage on the screen 801. Sometimes the temperature increase due to the extra energy is called an "allowance degree".

In the system monitoring apparatus of the first embodiment, as illustrated in the screen 801, the status data (the temperature at the reflow furnace 700) is displayed together with energy consumption of an instrument (heater 702) used to adjust the status data, and the allowance degree for the reference range is indicated in the status data. Therefore, a system manager can visually recognize how much allowance exists from the state in which the status data can minimally be maintained within the reference range in a current control mode of the production system. Therefore, the system manager can change the control mode of the instrument such that the energy supplied to the instrument is decreased while the status data is maintained within the reference range.

Information on the production system in FIG. 1 is illustrated on the screen 802 in FIG. 2 in the case that the control mode of the instrument is changed. A time change in consumption amount of the electric power is illustrated on the upper stage of the screen 802, and a time change of the status data is illustrated on the lower stage of the screen 802. On the upper stage of the screen 802, the change in power consumption amount illustrated on the screen 801 is illustrated by a broken line.

The screen 802 illustrates a result in which the control mode of the instrument is changed to suppress the consumption amount of the electric power until a clock time T1 at which a large amount of electric power is particularly consumed on the screen 801. Similar to the lower stage of the screen 801, a portion corresponding to the extra energy is hatched on the lower stage of the screen 802. On the lower stage of the screen 802, the temperature until a clock time T2 is decreased by the reduction of the power consumption compared with a result of a time slot corresponding to the lower stage of the screen 801. This can visually be recognized by reduction of an area that is hatched as the extra energy until the clock time T2. However, the temperature change until the clock time T2 on the screen 802 falls within the reference range.

Accordingly, the information illustrated on the screen 802 means that the energy saving is successfully performed by suppressing the consumption amount of the electric power until the clock time T1 while the temperature in the reflow furnace 700 is maintained within the reference range.

On the upper stage of the screen 802, the power consumption amount decreases even after the clock time T1 compared with the power consumption on the upper stage of the screen 801. On the other hand, on the lower stage of the screen 802, the temperature in the reflow furnace 700 increases compared with the temperature of the time slot corresponding to the lower stage of the screen 801. This is attributed to influences of disturbances to the system, such as the decrease of the number of boards input to the reflow furnace 700, closing of a damper of an exhaust heat duct, and control of a fan for the purpose of exhaust heat.

In other words, in the production system, a time at which an item possibly affecting the status data is generated is registered in the controller 100, the item is displayed on the screen 801 together with the electric consumption amount and/or the status data, so that the system manager can more accurately study a measure to reduce the energy consumption amount in the production system based on the presented information.

On the lower stages of the screens 801 and 802, the integral value of the difference between the status data and the lower limit is illustrated as the extra energy. This is because, in the target system, the energy is supplied to the instrument (heater 702) in order to increase the temperature in the reflow furnace 700.

On the other hand, for example, in the case that the energy is supplied to the instrument (for example, a cooling fan) in order to refrigerate a space in the system to decrease the temperature at the space, the extra energy is illustrated on a screen 803 in FIG. 3. Similar to the screen 801 in FIG. 2, the energy consumption amount and the time change of the status data of the instrument are illustrated on the upper and lower stages of the screen 803 in FIG. 3. On the lower stage of the screen 803, the integral value of the difference between the status data and the upper limit is illustrated as the extra energy. In the example of FIG. 3, it is necessary to maintain the status data at the upper limit in order that the status data falls minimally within the reference range while the power consumption of the instrument is suppressed to the minimum. Accordingly, it is said that the energy, which is provided to decrease the value of the status data, is extra from the viewpoint of minimally positioning the status data within the reference range. Therefore, in FIG. 3, the integral value of the difference between the upper limit and the status data is illustrated as the extra energy.

Based on the screen 803 in FIG. 3, the system manager can visually recognize how long period and how much degree of the electric energy supplied to the instrument is reduced. Therefore, the system manager can decide the control mode of the instrument such that the status data falls within the reference range while the excess energy consumption is reduced.

<System Configuration (2)>

FIG. 4 is a view schematically illustrating another example of the configuration of the production system of the first embodiment.

Referring to FIG. 4, the production system includes a clean booth 500 that is of a space where the product is produced. Particle sensors 200 are placed in the clean booth 500 in order to detect cleanliness in the clean booth 500. Although not illustrated in FIG. 4, in the clean booth 500, a line is placed to produce the product, and a worker is arranged to manage the line.

Frames 501 are formed in a ceiling portion of the clean booth 500, and an FFU (Filter Fan Unit) 300 including a fan, which discharges dust in the clean booth 500 to the outside of the clean booth 500, is placed in each of the frames 501.

FIG. 4, a broken-line arrow indicates an air flow. In the clean booth 500, the fan (hereinafter, sometimes the "FFU 300" means the "fan" included in the FFU 300) of the FFU 300 runs to introduce air into the clean booth 500, whereby the air in the clean booth 500 is discharged to the outside of the clean booth 500 through ventilation holes provided in a bottom surface of the clean booth 500.

The production system in FIG. 4 includes a controller 100 that controls an operation of the FFU 300 based on a detection output of the particle sensor 200. A monitor 111 is connected to the controller 100. The monitor 111 is constructed by general-purpose display devices, such as a liquid crystal display device.

In FIG. 4, the cleanliness detected by the particle sensor 200 in the clean booth 500 is an example of the status data indicating the state in which the cleanliness affects production quality of the product produced in the production system. The FFU 300 is an example of the instrument that consumes the energy by the running for the purpose of adjustment of the system state. The controller 100 is an example of the system monitoring apparatus that controls the operation of the instrument based on the status data.

FIG. 5 is a view illustrating a content of information presented about the production system in FIG. 4.

A screen 804 and a screen 805 are illustrated in FIG. 5.
The screen 804 illustrates information on energy consumption in the production system before an energy saving measure. Specifically, two graphs are illustrated on the screen 804. The upper graph illustrates the time change in electricity usage of the FFU 300. The lower graph illustrates the time change of the status data of the FFU 300.

In the system in FIG. 4, the "status data" means the cleanliness measured by the particle sensor 200 in the clean booth 500. In the production system in FIG. 4, the upper limit is defined for the cleanliness (the number of dust particles included per unit volume), and the operation of the FFU 300 is controlled such that the cleanliness is maintained at the upper limit or less..

The electric power is properly supplied to the FFU 300 as illustrated on the upper stage of the screen 804 in FIG. 5, whereby the cleanliness of the clean booth 500 changes at the upper limit or less as illustrated on the lower stage of the screen 804 in FIG. 5.

Timing of an event (installation of the product into the clean booth 500) that possibly affects the cleanliness of the clean booth 500 in the production system is registered in the controller 100. On the lower stage of the screen 804, the event is illustrated together with the status data such that the timing of the event can be recognized.

In the lower stage on the screen 804, the integral value (region) of the difference between the measured value and the upper limit is hatched as the extra energy. The extra energy will be described below.

In the production system in FIG. 4, the electric power is supplied to the FFU 300 in order to discharge the dust in the clean booth 500 to the outside of the clean booth 500. That is, the energy is supplied to the FFU 300 in order to decrease the value, which is detected as the cleanliness in the clean booth 500.

In order that the status data is maintained at the reference value or less while the electric energy supplied to the FFU 300 is suppressed to the minimum, it is necessary that the electric power be supplied to the FFU 300 such that the status data is maintained at the upper limit. That is, in the case that the status data is less than the upper limit, it can be said that the difference between the upper limit and the status data is the decrease of the detection value due to the supply of the extra electric power to the FFU 300. From this viewpoint, the integral value of the difference between the status data and the upper limit is illustrated as the decrease of the detection value due to the extra energy in the lower stage on the screen 804. Sometimes such a decrease of the detection value due to the extra energy is called the "allowance degree" herein.

In the system monitoring apparatus of the first embodiment, as illustrated in the screen 804, the status data (the value detected by the particle sensor 200) is displayed together with the energy consumption of the instrument (FFU 300) used to adjust the status data, and the allowance degree for the reference range (the upper limit in the production system in FIG. 4) is indicated in the status data. Therefore, the system manager can visually recognize how much the allowance exists from the state in which the status data can minimally be maintained within the reference range in the current control mode of the system. Therefore, the system manager can change the control mode of the instrument such that the energy supplied to the instrument is decreased while the status data is maintained within the reference range.

The screen 805 in FIG. 5 illustrates the information on the production system in FIG. 4 in the case that the control mode of the instrument is changed, the upper stage of the screen 805 illustrates the time change of the consumption amount of the electric power, and the lower stage illustrates the time change of the status data.

On the screen 805, particularly the control mode of the instrument is changed in order to suppress the consumption amount of the electric power until the product is installed into the clean booth 500.

On the upper stage of the screen 805, the power consumption until a clock time T3 is reduced compared with the upper stage of the screen 804. As illustrated on the lower stage of the screen 805, the detection value of the particle sensor 200 until a clock time T4 is increased by the reduction of the power consumption compared with the result of the time slot corresponding to lower stage of the screen 804. However, the detection value on the lower stage of the screen 805 falls within the reference range (the upper limit or less) even in a period until the clock time T4.

Accordingly, the information illustrated on the screen 805 means that the energy saving is successfully performed by suppressing the consumption amount of the electric power until the clock time T3 while the cleanliness in the clean booth 500 is maintained within the reference range.

<Hardware Configuration>

The system, which is described as "System Configuration (2)" with reference to FIG. 4 in order to control the number of dust particles in the clean booth 500, will be described below.

FIG. 6 is a view schematically illustrating a hardware configuration of the controller 100. Referring to FIG. 6, the controller 100 includes a CPU (Central Processing Unit) 10, a ROM (Read Only Memory) 11, a RAM (Random Access Memory) 12, a communication device 18, a display interface 14, a manipulation part 15, a storage device 16, and a media controller 17. The CPU 10 is an arithmetic device that controls the whole controller 100. A program executed by the CPU 10 is stored in the ROM 11. The RAM 12 acts as a work region when the CPU 10 executes the program. The communication device 18 is constructed by a modem that conducts communication, such as reception of the detection output from the particle sensor 200 and transmission of control data to the FFU 300. The display interface 14 is an interface used to transmit image data to the monitor 111. The manipulation part 15 receives a manipulation input to the controller 100. The program executed by the CPU 10 is stored in the storage device 16. The media controller 17 accesses a storage medium 900 that is detachably attached to the controller 100, and reads or writes a file from and in the storage medium 900.

The display interface 14 may be constructed in a hardware manner by a board for a driver of the monitor 111, or the display interface 14 may be constructed in a software manner by software for the driver of the monitor 111. For example, the manipulation part 15 is constructed by input devices, such as a keyboard and a mouse. In the first embodiment, the manipulation part 15 is constructed by a touch sensor, and the manipulation part 15 is constructed as a touch panel while being integral with the monitor 111.

In the first embodiment, for example, the CPU 10 executes a proper program to implement at least a part of the functions of the controller 100 described herein.

At least a part of the program executed by the CPU 10 may be stored in the storage medium 900. Examples of the storage medium 900 in which the program is stored in a nonvolatile manner include a CD-ROM (Compact Disc-Read Only Memory), a DVD-ROM (Digital Versatile Disk-Read Only Memory), a USB (Universal Serial Bus) memory, a memory card, an FD (Flexible Disk), a hard disk, a magnetic tape, a cassette tape, an MO (Magnetic Optical Disc), an MD (Mini Disc), an IC (Integrated Circuit) card (except the memory card), an optical card, a mask ROM, an EPROM, and an EEPROM (Electronically Erasable Programmable Read-Only Memory).

Alternatively, the program executed by the CPU 10 may be downloaded through a network and installed in the storage device 16.

<Functional Configuration>

FIG. 7 is a view schematically illustrating a functional configuration of the controller 100.

Referring to FIG. 7, the controller 100 includes a data accumulation part 101, a quality allowance degree calculator 102, an room-for-energy-reduction calculator 103, and a display controller 104. For example, the data accumulation part 101 is implemented by the RAM 12 and/or the storage device 16. For example, the CPU 10 executes a proper program to construct the quality allowance degree calculator 102, the room-for-energy-reduction calculator 103, and the display controller 104.

The data accumulation part 101 receives and accumulates the continuous detection output (status data) from the particle sensor 200.

The quality allowance degree calculator 102 calculates the "allowance degree" based on the status data accumulated in the data accumulation part 101 and a reference value (the upper limit or the lower limit with respect to the status data).

The room-for-energy-reduction calculator 103 calculates an integration value of the allowance degree calculated by the quality allowance degree calculator 102.

The display controller 104 displays the integration value of the allowance degree calculated by the room-for-energy-reduction calculator 103 on the monitor 111 like the screen 801 in FIG. 2 and the screen 804 in FIG. 5.

The electric energy consumed by the FFU 300 is also accumulated in the data accumulation part 101. The display controller 104 can also display the power consumption amount of the FFU 300 on the monitor 111 together with the integration value of the allowance degree.

<Control Flow>

FIG. 8 is a flowchart of processing of displaying the screen 804 in FIG. 5, which is performed by the controller 100. The processing in FIG. 8 may be performed using the real-time detection result of the particle sensor 200 or the power consumption amount of the FFU 300, or the processing may be performed using the detection result or the power consumption amount, which is previously stored in the storage device 16.

Referring to FIG. 8, the CPU 10 sets a management criterion for the status data in Step S10. Then the CPU 10 goes to processing in Step S20. The management criterion means the upper limit, the lower limit, and the reference range with respect to the status data. That is, the setting of the management criterion means that the reference value is set to manage the status data. The CPU 10 sets the reference value based on the information input by the manipulation of the manipulation part 15 or the information previously registered in the storage device 16 and/or the storage medium 900.

In Step S20, the CPU 10 acquires the status data in each previously-set time interval (sampling time), and calculates the allowance degree based on the acquired status data. Then the CPU 10 goes to processing in Step S30.

In Step S30, the CPU 10 determines whether the allowance degree calculated in Step S20 is greater than zero. The allowance degree is greater than zero when the status data falls within the reference range, and the allowance degree is less than zero when the status data is out of the reference range. Specifically, for example, in the production system in FIG. 4, the allowance degree is calculated as a value in which the status data is subtracted from the upper limit. When the detection value of the particle sensor 200 is less than the upper limit, the allowance degree is a positive value. On the other hand, when the detection value of the particle sensor 200 is greater than the upper limit, the allowance degree is a negative value. In the latter, assuming that the allowance degree is less than zero, the CPU 10 goes to processing in Step S40.

In Step S40, the CPU 10 corrects the allowance degree calculated in Step S20 to "0". Then the CPU 10 goes to processing in Step S50.

In Step S50, the CPU 10 sets a unit period during which the room for energy reduction is calculated. Then the CPU 10 goes to processing in Step S60. For example, the CPU 10 sets the unit period based on the information input through the manipulation part 15.

In Step S60, CPU 10 calculates the room for energy reduction in each unit period set in Step S50. Then the CPU 10 goes to processing in Step S70. It is assumed that the unit period is shorter than one day like one hour or two hours.

In Step S70, the CPU 10 calculates the room for energy reduction per one day. Then the CPU 10 goes to processing in Step S80.

In Step S80, the CPU 10 produces image data of a graph or a table, which includes the room for energy reduction calculated in Step S60 or S70. Then the CPU 10 goes to processing in Step S90.

In Step S90, the CPU 10 allows the monitor 111 to display the screen illustrating the room for energy reduction, which includes the image data produced in Step S80, like the screen 804 in FIG. 5. Then the CPU 10 ends the processing.

<Display Example (1)>

FIG. 9 is a view illustrating an example of the display of the detection output result of the particle sensor 200 in the clean booth 500 on one day. The CPU 10 receives the continuous detection output from the particle sensor 200, and displays the screen as shown in FIG. 9 on the monitor 111 using the previously-set upper limit.

A graph 811 and a table 812 are illustrated in FIG. 9. In the graph 811, a horizontal axis indicates the clock time, and a vertical axis indicates the number of particles detected by the particle sensor 200.

In the production system in which the detection result in FIG. 9 is presented, the number of particles per unit volume of "10000" is set as the management criterion (upper limit) to the clean booth 500 that is of the detection target of the particle sensor 200. In the graph 811, the difference between the detection output of the particle sensor 200 and the number of particles of "10000" is hatched and illustrated as "room for reduction". The difference corresponds to the "extra energy" on the screen 801 in FIG. 2. The CPU 10 obtains the difference between the detection value of "10000" or less and "10000", and produces data used to display the graph 811.

A region illustrated as the room for reduction on the graph 811 is quantified in the table 812. In the table 812, "data 1" indicates a percentage value of a ratio of the hatched portion to the whole portion of the number of particles of "10000" on the graph 811. The CPU 10 obtains the difference between the detection value of "10000 " or less and "10000", and obtains the integration value of the difference to calculate the value of the data 1.

In the table 812, the maximum room for reduction means a ratio of the whole portion (that is, 100%) to the whole portion of the number of particles of "10000" that is of the reference value, and the minimum room for reduction means a ratio of the room for reduction (that is, 0%) in the case that the detection value of the particle sensor 200 is maintained at the number of particles of "10000" in a display target period.

<Display Example (2)>

FIG. 10 is a view illustrating an example of display in which room for energy reduction of each device in a room is displayed together with a layout of indoor devices.

A table 821 and a device layout 822 are illustrated in FIG. 10. The table 821 illustrates a list of processes of the room for energy reduction in the indoor devices.

The device layout 822 illustrates regions 8220 and 8225 that are of two work rooms and dispositions of a locker room and an air shower, which are adjacent to the regions 8220 and 8225. The region 8220 includes an icon 8221 indicating a die bonder, an icon 8222 indicating a plasma cleaning machine, and an icon 8223 indicating a wire bonder. The region 8225 includes icons 8226 and 8227 indicating two molding machines respectively.

The table 821 includes the process, the quality control value, and the room for reduction. The process specifies each process included in the device layout 822. The quality control value is the reference value (for example, the upper limit and/or the lower limit), which set in each process, with respect to the status data. The room for reduction is a value, such as "data 1" in the example explained with reference to FIG. 9, in each process, and is a value indicating a quantity, which is controlled to maintain more safety environment in a specific period compared with the case that the instrument maintaining the environment of each process is controlled such that the reference value is minimally satisfied. Specifically, the room for reduction is an integration value of the difference between the detection value falling within the reference range and the reference value in the specific period.

The processes (in the order of "die bonder", "plasma cleaning", "wire bonder", "mold 1", and "mold 2") corresponding to the icons 8221, 8222, 8223, 8226, and 8227 are illustrated in the table 821. In the table 821, the reference values (in the order of "10000", "10000", "10000", "100000", and "100000") for the detection value (status data) of the particle sensor 200 are also illustrated as the quality control value of each process. In the table 821, calculation results (in the order of "98.8%", "74.2%", "98.6%", "99.4%", and "91.2%") of the room for reduction in the specific period (for example, one day) are illustrated in each process.

The information displaying the device layout 822 is previously registered in the controller 100. The information, which correlates at least one process in the device layout 822 with the detection output of the particle sensor 200 disposed at the site where the process is performed, is registered in the storage device 16 of the controller 100. The detection output of the particle sensor 200 for at least one process in the device layout 822 is accumulated in the storage device 16 of the controller 100.

In the controller 100, when the information assigning the work room is input through the manipulation part 15 (or from another device through the communication device 18), the CPU 10 calculates the room for reduction based on the detection output of the particle sensor 200 of each process included in the assigned work room, and displays the screen in FIG. 10 on the monitor 111.

<Display Example (3)>

FIGS. 11A to 11C are views illustrating an example of display including at least two modes with respect to the detection output of the particle sensor 200.

A graph 831, a graph 832, and a table 833 are illustrated in FIG. 11. The graph 831 illustrates a change of the detection value of the particle sensor 200 in a specific period. The graph 832 illustrates the value of the room for reduction, which is calculated for a certain period of time (for example, every hour) based on the detection result illustrated in the graph 831 and the upper limit set to the system. The table 833 illustrates the value of the room for reduction of each time slot in the graph 831. "0:00" in the table 833 indicates the time slot from 0:00 to 0:59. Similarly, each of the time slots described in other fields means a time slot from the described clock time to the last clock time of the clock time described next.

The CPU 10 calculates the difference between the detection value of the process, which is acquired from the particle sensor 200, and the reference value (for example, the upper limit), and calculates the integration value of the difference in each given period to obtain the value of the room for reduction of each time slot. The CPU 10 displays the value of the room for reduction of each time slot in the graph 832 and the table 833.

<Display Example (4)>

FIGS. 12 to 14 are views illustrating examples of the display of the detection result on one day.

FIG. 12 illustrates the time change of the detection value of the particle sensor 200 on one day (November 20th). FIG. 13 illustrates the time change of the detection value on another day (November 27th), and FIG. 14 illustrates the time change of the detection value on still another day (November 28th). The reference value ("management criterion" in FIGS. 12 to 14, namely, the number of particles per unit volume of "10000" (p/cf)) set to the production system is also illustrated together with the reference value on each day.

FIG. 15 illustrates the value of the room for energy reduction on each day, which is obtained from the detection value on each day in FIGS. 12 to 14, in the form of the table.

In the controller 100, the detection result on each of the plural days is registered in the storage device 16, and the CPU 10 displays the detection result on the monitor 111 as illustrated in FIGS. 12 to 14, calculates the room for energy reduction on each day, and displays the room for energy reduction on the monitor 111 as illustrated in FIG. 15. The graphs in FIGS. 12 to 14 and the table in FIG. 15 may simultaneously be displayed. Therefore, the system manager can visually recognize the results on plural days at the same time, and study the control content of the system in a comprehensive or long-term manner.

[Second Embodiment]

<Functional Configuration>

FIG. 16 is a view schematically illustrating a functional configuration of a controller 100 according to a second embodiment of the system monitoring apparatus of the present invention. Because a hardware configuration of the controller 100 of the second embodiment is identical to that of the first embodiment, the detailed description is omitted.

Referring to FIG. 16, the controller 100 of the second embodiment includes a quality risk calculator 105 in addition to the controller 100 of the first embodiment in FIG. 7. The quality risk calculator 105 calculates a predicted value of the status data in a specific period based on the status data in the specific period.

<Calculation of Room for Energy Reduction Based on Predicted Value> (Predicted value)

In the second embodiment, the CPU 10 continuously acquires the detection output of the particle sensor 200, and derives a range (prediction range) where the change in cleanliness is predicted at each time point using the pieces of past status data for a previously-defined setting period.

In the second embodiment, the CPU 10 calculates the room for energy reduction based on a relationship between the prediction range and the reference value. Therefore, the system manager can make a control plan to reduce the energy consumed by the instrument in the system while the status data falls more securely within the reference range.

FIG. 17 is a view schematically illustrating examples of the status data and the prediction range in the production system.

In FIG. 17, a measured value (measured value RV) of the status data is illustrated by a solid line, an upper limit (upper-limit predicted value PH) and a lower limit (lower-limit predicted value PL) of the prediction range are illustrated by broken lines, and an average value (average value AV) of the prediction range is illustrated by an alternate long and short dash line.

At each time point, the prediction range is derived for the time point using a moving average $\mu$ of the status data in the setting period and a moving deviation $\sigma$ of the status data in the setting period. Specifically, an upper limit PH and a lower limit PL of the prediction range are derived according to the following equations (1) and (2).

$$PH = \mu + 3\sigma \quad \cdots \quad (1)$$

$$PL = \mu - 3\sigma \quad \cdots \quad (2)$$

(Explanation of upper-limit predicted value and lower-limit predicted value)

FIGS. 18A to 18C are views schematically illustrating the moving average, the upper-limit predicted value, and the lower-limit predicted value at each of the clock times T1, T2, and T3 in FIG. 17.
In FIG. 18A, for the clock time T1, a distribution of the pieces of status-data measured values in the setting period before the clock time T1 is illustrated by the solid line. In FIG. 18A, an upper-limit predicted value PH1 is a value in which 3σ (σ is the moving deviation obtained from the measured values in the setting period) is added to a moving average AV1, and a lower-limit predicted value PL1 is a value in which 3σ is subtracted from the moving average AV1.
In FIG. 18B, for the clock time T2, a distribution of the pieces of measured-value status data in the setting period before the clock time T2 is illustrated by the solid line. In FIG. 18B, an upper-limit predicted value PH2 is a value in which 3σ is added to a moving average AV2 in the setting period, and a lower-limit predicted value PL2 is a value in which 3σ is subtracted from the moving average AV2.
In FIG. 18C, for the clock time T3, a distribution of the pieces of measured-value status data in the setting period before the clock time T3 is illustrated by the solid line. In FIG. 18C, an upper-limit predicted value PH3 is a value in which 3σ is added to a moving average AV3 in the setting period, and a lower-limit predicted value PL3 is a value in which 3σ is subtracted from the moving average AV3.
The prediction range is derived from moment to moment. That is, the prediction range with respect to the clock time T1 is derived based on the pieces of status data for the setup period immediately before the clock time T1, and the prediction ranges with respect to the clock times T2 and T3 are derived based on the pieces of status data for the setup periods immediately before the clock times T2 and T3, respectively. Therefore, the situation of the clean booth 500 that changes from moment to moment can be reflected in the prediction range.

(Correction of upper-limit predicted value and/or lower-limit predicted value)

When the measured value of the status data is greater than the upper limit or less than the lower limit of the prediction range, the controller 100 corrects the upper limit upward, or corrects the lower limit downward. In FIG. 19, the measured value of the status data is greater than the upper limit of the prediction range at the time point in which "emergency sensing" is indicated. In FIG. 19, in response to the emergency sensing, the subsequent upper-limit predicted values are corrected upward. The pre-correction upper-limit predicted value PH is indicated by a broken line, and a post-correction upper-limit predicted value PHX is indicated by a dotted line. In this case, for example, the correction is implemented by adding (subtracting) a predetermined value to the upper limit (or from the lower limit) calculated according to the equation (1) or (2) based on the status data of the past measured values for the setup period with respect to each clock time.
The upper limit or the lower limit of the prediction range is corrected only for a predetermined period since the emergency sensing.

(Calculation of room for energy reduction)

FIG. 20 is a view illustrating the calculation result of the room for energy reduction, which is displayed on the monitor 111 by the CPU 10 of the second embodiment.

A graph 841 and a table 842 are illustrated in FIG. 20.

In the graph 841, the status data (the detection value of the particle sensor 200) is illustrated by the solid line, and the calculated predicted value (upper-limit predicted value) is illustrated by the broken line. In FIG. 20, the horizontal axis indicates passage of time. The management criterion (an upper-limit-side reference value for the status data) is illustrated by a bold broken line.
In the second embodiment, a portion indicating the difference between the reference value and the predicted value is hatched in the period during which the predicted value is less than or equal to the reference value, and the portion is illustrated as the room for energy reduction. In the second embodiment, the room for energy reduction is derived based on the predicted value.
In the table 842, a quality risk and the room for energy reduction are illustrated in the result illustrated in the graph 841. The room for energy reduction is a ratio of the hatched portion in the graph 841 to the portion that is less than or equal to the reference value (10000 p/cf) of the graph 841.
The quality risk is a value of a degree at which the predicted value is greater than the reference value. FIG. 20 illustrates the integration value of the number of particles in the portion in which the predicted value is greater than the reference value. The CPU 10 calculates the predicted value as described above and then calculates the integration value of the difference between the predicted value and the reference value in the portion in which the predicted value is greater than the reference value, so as to calculate the quality risk.

In the second embodiment, the CPU 10 calculates the quality risk of the system based on the calculated predicted value in consideration of the system status including the influence of the disturbance, which changes from moment to moment. Therefore, the system monitoring apparatus of the second embodiment can quantitatively provide the risk that the status data of the production system is greater than the reference range.

In the system monitoring apparatus, plural predicted values having different probabilities that the status data reaches the reference value may be calculated as the predicted value.

That is, in addition to the predicted values calculated according to the equations (1) and (2), the CPU 10 calculates a predicted value, which has a lower probability that the status data reaches the reference value compared with the predicted values calculated according to the equations (1) and (2). Specifically, assuming that the predicted values calculated according to the equations (1) and (2) are an "upper-limit predicted value (1)" and a "lower-limit predicted value (1)", the CPU 10 further calculates an "upper-limit predicted value (2)", a "lower-limit predicted value (2)", an "upper-limit predicted value (3)", a "lower-limit predicted value (3)", an "upper-limit predicted value (4)", and a "lower-limit predicted value (4)". For example, the predicted values are calculated according to the following equations (3) to (8).

$$\text{"upper-limit predicted value (2)"} = \mu + 4\sigma \quad \cdots (3)$$

$$\text{"lower-limit predicted value (2)"} = \mu - 4\sigma \quad \cdots (4)$$

$$\text{"upper-limit predicted value (3)"} = \mu + 5\sigma \quad \cdots (5)$$

$$\text{"lower-limit predicted value (3)"} = \mu - 5\sigma \quad \cdots (6)$$

$$\text{"upper-limit predicted value (4)"} = \mu + 6\sigma \quad \cdots (7)$$

$$\text{"lower-limit predicted value (4)"} = \mu - 6\sigma \quad \cdots (8)$$

The "upper-limit predicted value (1)", the "upper-limit predicted value (2)", the "upper-limit predicted value (3)", and the "upper-limit predicted value (4)" are arrayed in the descending order of the probability that the status data reaches the reference value. That is, the "upper-limit predicted value (1)" has the highest probability, and the "upper-limit predicted value (4)" has the lowest probability.

As to the lower limit, the "lower-limit predicted value (1)", the "lower-limit predicted value (2)", the "lower-limit predicted value (3)", and the "lower-limit predicted value (4)" are arrayed in the descending order of the probability that the status data reaches the reference value. That is, the "lower-limit predicted value (1)" has the highest probability, and the "lower-limit predicted value (4)" has the lowest probability.

FIG. 21 illustrates the display mode of the room for energy reduction and the like in the case that the predicted values having the plural probabilities are calculated.

A graph 843 and a table 844 are illustrated in FIG. 21.

In the graph 843, the status-data measured value is illustrated by the solid line. The upper-limit predicted value (1) calculated based on the status data is illustrated by the broken line, the upper-limit predicted value (2) is illustrated by a dotted line, the upper-limit predicted value (3) is illustrated by the alternate long and short dash line, and the upper-limit predicted value (4) is illustrated by an alternate long and two short dashes line. The reference value (upper limit) for the status data is illustrated by the bold broken line.

In the table 844, the quality risk and the room for energy reduction, which are calculated with respect to each of the upper-limit predicted value (1) to the upper-limit predicted value (4), are illustrated in the result illustrated in the graph 843. In the graph 843, the room for energy reduction is a ratio of the portion, which indicates the difference between the reference value and the predicted value in the period during which each predicted value is less than or equal to the reference value, to the portion that is less than or equal to the reference value. The quality risk is the integration value of the portion in which each predicted value is greater than the reference value.

The system manager can visually recognize the quality risk corresponding to each predicted value by the display as shown in FIG. 21. Therefore, the system manager can properly recognize how much allowance is given to maintain the status data at the reference value or less in the control of the instrument of the system.

[Third Embodiment]

In the first and second embodiments, the CPU 10 calculates the room for energy reduction in the specific period. For example, the integration value of the detection value is calculated in the specific period in the case that the status data falls minimally within the reference range, the integration value of the difference between the detection value and the actually-detected status data (or the predicted value corresponding to the status data) is calculated, and the room for energy reduction is derived as a ratio of the integration value of the latter to the integration value of the former.

That is, in the first and second embodiments, the room for energy reduction is calculated as the ratio in each system.

In a third embodiment, the CPU 10 calculates and displays the room for energy reduction in each of the plural systems.

FIG. 22 is a view illustrating a display example of the calculation results of the room for energy reduction in the plural systems.

Graphs 851 to 856 and a display 857 are illustrated in FIG. 22.

The graphs 851, 853, and 855 illustrate the time changes of the power consumption amounts of the instruments (the instrument used to adjust the status data) that maintain the system environment in the different systems (target A, target B, and target C). The graphs 852, 854, and 856 illustrate the pieces of status data in the target A, the target B, and the target C and the management criteria (upper-limit-side and lower-limit-side limit values) for the pieces of status data. The extra energy which is described with reference to the screen 801 (see FIG. 2) or the screen 804 (see FIG. 5) is hatched in the graphs 852, 854, and 856.

The CPU 10 acquires the status data and the management criterion in each system, and calculates the room for energy reduction in each system based on the status data and the management criterion. The calculation results are illustrated in the table 860.

In the table 860, "50%", "3%", and "70%" are illustrated as the room for energy reduction with respect to the target A, the target B, and the target C.

A manager who is in charge of all the systems can visually recognize the room for energy reduction in each system at the same time by referring to the table 860. Therefore, the systems can be compared in the room for energy reduction. That is, the manager can select the system, which has the higher room for energy reduction rather than the higher energy consumption amount, as the improvement target of the control content in the plural systems.

FIG. 23 is a view illustrating an example of information in each post-improvement system. Graphs 871, 873, and 875 illustrate the time changes of the power consumption amounts of the instruments in the target A, the target B, and the target C. In the graph 875, the power consumption amount of the pre-improvement instrument illustrated in the graph 855 in FIG. 22 is illustrated by the broken line.

Graphs 872, 874, and 876 illustrate the pieces of status data in the target A, the target B, and the target C and the management criteria (upper-limit-side and lower-limit-side limit values) for the pieces of status data in the case that electric powers are supplied to the instruments as illustrated in the graphs 871, 873, and 875.

FIG. 23 illustrates the information in the case that the system is improved with respect to only the target C having the highest room for energy reduction in FIG. 22. Specifically, as illustrated in the graph 875 in FIG. 23, the electric energy supplied to the instrument decreases compared with the graph 855. Therefore, as illustrated in the graph 876 in FIG. 23, the status data varies until the status data is positioned near the reference value compared with the graph 856. However, the status data falls within the reference range.

According to the third embodiment, the system manager can deal with the reduction of the energy consumption amount from the system having the higher room for energy reduction in the plural systems, and therefore the energy consumption amount can efficiently be reduced.

FIG. 24 is a view illustrating another example of information in each post-improvement system. Graphs 881, 883, and 885 illustrate the time changes of the power consumption amounts of the instruments in the target A, the target B, and the target C. In the graphs 881 and 885, the power consumption amounts of the pre-improvement instruments illustrated in the graphs 851 and 855 in FIG. 22 are illustrated by the broken lines.

Graphs 882, 884, and 886 illustrate the pieces of status data in the target A, the target B, and the target C and the management criteria (upper-limit-side and lower-limit-side limit values) for the pieces of status data in the case that electric power is supplied to the instruments as illustrated in the graphs 881, 883, and 885.

FIG. 24 illustrates the pieces of information in the case that the system is improved with respect to the target C having the highest room for energy reduction in FIG. 22 and the target B having the second highest room for energy reduction.

As illustrated in the graph 881 in FIG. 24, the electric energy supplied to the instrument decreases compared with the graph 851. Therefore, as illustrated in the graph 882 in FIG. 24, the status data varies until the status data is positioned near the reference value compared with the graph 852. However, the status data falls within the reference range.

The above embodiments and variations thereof are described by way of example, and the present invention is not limited to the embodiments and variations. The scope of the present invention is defined by not the above description but claims, includes meanings equivalent to the claims and all the changes within the claims.

For example, the allowance degree is calculated using not the standard deviation but values that can be derived using statistical techniques, such as a value that can be calculated from a frequency distribution of the status data and a value in which the average value is multiplied by a coefficient.

The target system may be the system related to the production of the product and the system that consumes the energy. In addition to the examples explained in the embodiments, the target system may be a system, in which an oxygen concentration is used as the status data in a nitrogen displacing furnace and nitrogen gas, which can be defined as secondary energy produced by consuming energy, is used as consumed energy. Additionally, a production system including a production apparatus provided with an air actuator and a vacuum chuck, the production system in which a pressure of compressed air produced as energy consumed in the production by a compressor is used as the status data can be cited as another example. A system in which a production apparatus that requires cooling water or hot water is used can be cited as still another example. In the system, the status data is the temperature, and the energy used in the production is thermal energy consumed in an apparatus that produces the cooling water or the hot water. An air-conditioning system placed in production facilities, in which the temperature is used as the status data and consumed energy is used as power of an air conditioner, can be cited as still another example.

The embodiments and modifications thereof can solely be implemented, or implemented by a combination as needed basis.

**Claims**

1. A system monitoring apparatus that is used for an operation of an instrument, the instrument consuming energy to adjust a state of a production system based on status data, the status data indicating a state that affects production quality of a product produced by the production system, the system monitoring apparatus comprising:

    an acquisition part that continuously acquires the status data;
    an allowance degree calculator that calculates an allowance degree for a reference value, which guarantees the production quality with respect to the status data, of a moving average value of the continuously-acquired pieces of status data based on the moving average value and the reference value;
    a room-for-energy-reduction extractor that extracts room for energy reduction of the instrument from the allowance degree; and
    a display part that displays the room for energy reduction.

2. The system monitoring apparatus according to claim 1, wherein the allowance degree calculator extracts a difference between a value, which is calculated from the moving average value and a moving deviation of the continuous pieces of status data, and the reference value as the allowance degree.

3. The system monitoring apparatus according to claim 1 or 2, wherein the room-for-energy-reduction extractor calculates the room for energy reduction for a certain period of time, and the display part displays a graph or a table of the room for energy reduction.

4. The system monitoring apparatus according to any one of claims 1 to 3, wherein
    the acquisition part is placed in each region or each process, and acquires the status data of each region or each process,
    the room-for-energy-reduction extractor extracts the room for energy reduction from the status data of each region or each process, and
    the display part displays the room for energy reduction together with a figure of the region or the process.

5. The system monitoring apparatus according to any one of claims 1 to 4, wherein the room-for-energy-reduction extractor extracts the room for energy reduction by performing a time integration of the allowance degree that is the difference between the status data and the reference value.

6. The system monitoring apparatus according to any one of claims 1 to 5, further comprising a controller that controls the operation of the instrument such that the status data falls within a range of the reference value.

7. The system monitoring apparatus according to any of claims 1 to 6,
wherein the status data is output from a sensor that measures a state affecting production quality of the production system; and
the acquisition part is a reception part that continuously receives the status data.

8. A method for controlling an operation of a system monitoring apparatus that is used for an operation of an instrument, the instrument consuming energy to adjust a state of a production system based on status data, the status data being output from a sensor that measures a state affecting production quality of the production system, wherein the system monitoring apparatus
receives continuously the status data and stores the continuous pieces of status data in a memory;
calculates a moving average value from the continuous pieces of status data stored in the memory;
calculates an allowance degree for a reference value, which guarantees the production quality with respect to the status data, of the moving average value based on the moving average value and the reference value;
extracts room for energy reduction of the instrument from the allowance degree; and
displays the room for energy reduction on a display part.

9. The system monitoring apparatus according to any of claims 1 to 6,
wherein the instrument is a filter fan;
the state of the production system is an air cleanliness of a clean room;
the status data represents an air cleanliness class, which indicates a state that affects production quality of a product produced in the clean room;
the acquisition part is a particle sensor that continuously acquires the air cleanliness class;
the allowance degree calculator calculates an allowance degree for a reference value, which guarantees the production quality with respect to the air cleanliness class, of a moving average value of the continuously-acquired air cleanliness class based on the moving average value and the reference value;
the room-for-energy-reduction extractor extracts room for energy reduction of the filter fan from the allowance degree; and
the display part displays the room for energy reduction.

10. The system monitoring apparatus according to any of claims 1 to 6,
wherein the instrument is a heater;
the state of the production system is a state in a furnace;
the status data represents a temperature, which indicates a state that affects production quality of a product produced in the furnace;
the acquisition part is a temperature sensor that acquires the temperature;
the allowance degree calculator calculates an allowance degree for a reference value, which guarantees the production quality with respect to the temperature, of a moving average value of the continuously-acquired temperature based on the moving average value and the reference value;
the room-for-energy-reduction extractor extracts room for energy reduction of the heater from the allowance degree; and
the display part displays the room for energy reduction.

*FIG. 1*

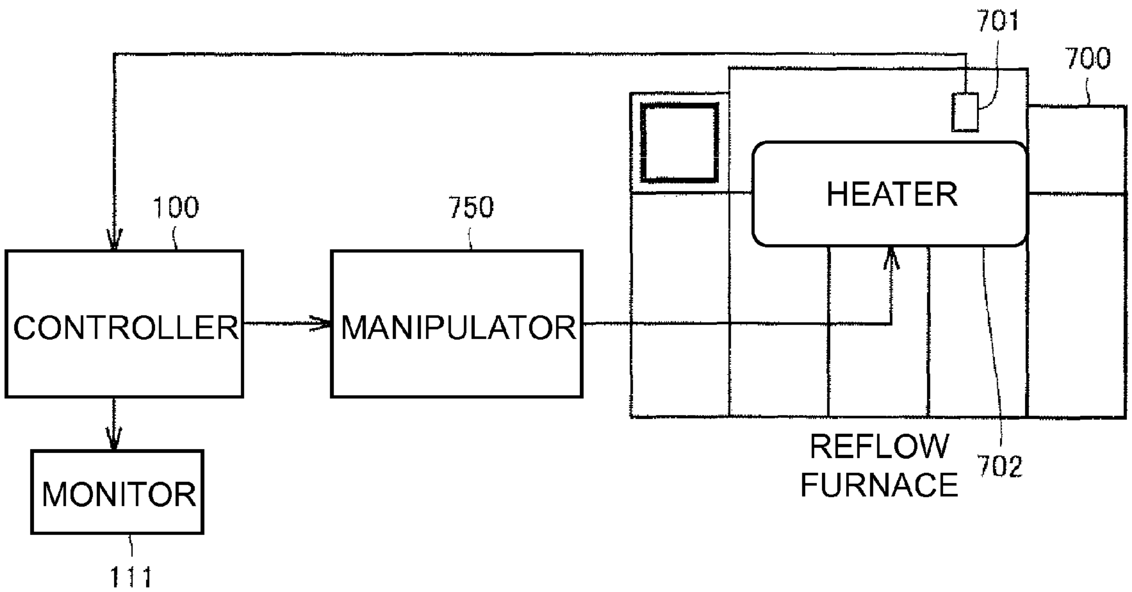
701
700
100
750
HEATER
CONTROLLER
MANIPULATOR
REFLOW
FURNACE
702
MONITOR
111

FIG. 2

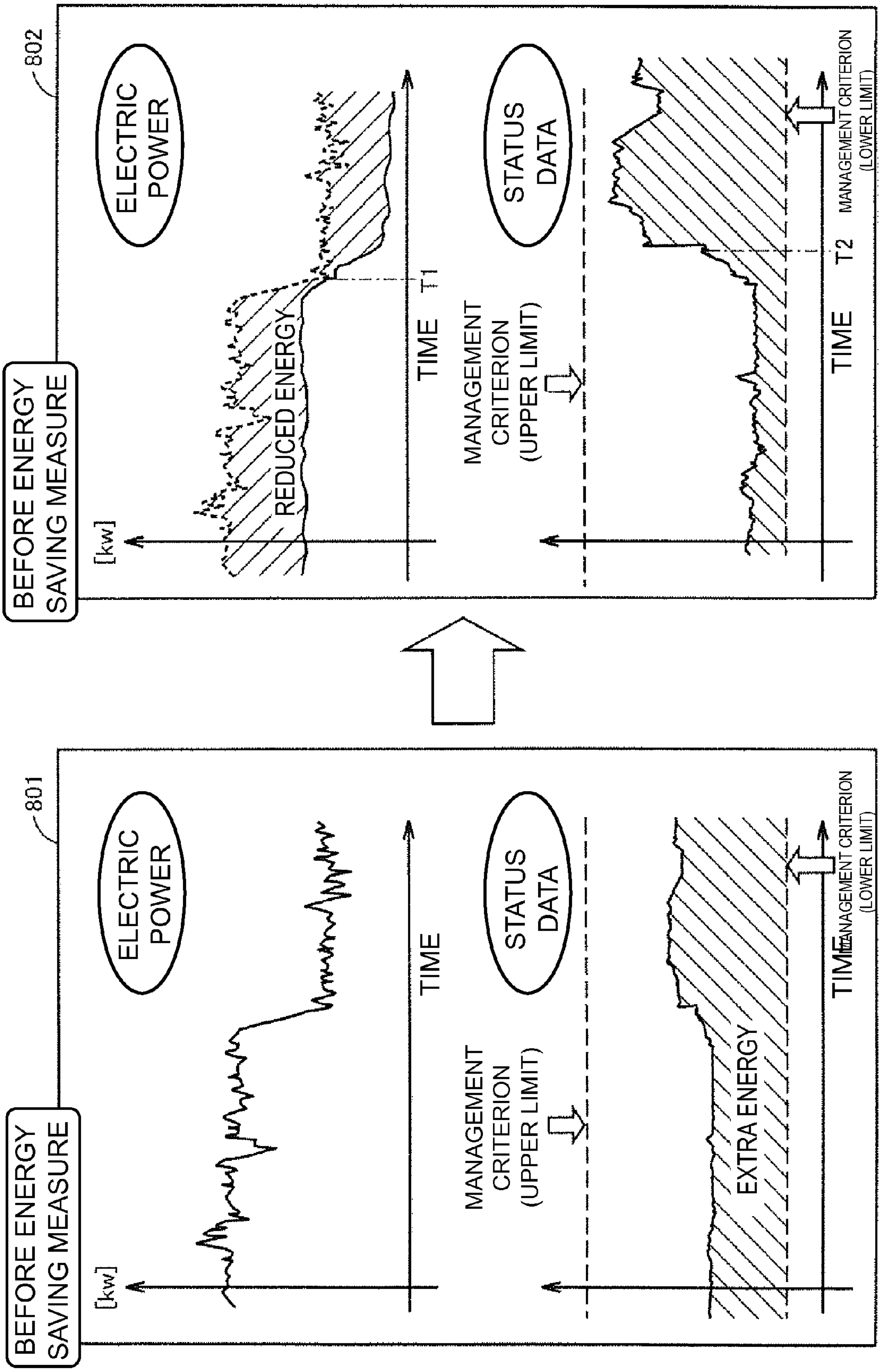
801
BEFORE ENERGY SAVING MEASURE
[kw]
ELECTRIC POWER
TIME
STATUS DATA
MANAGEMENT CRITERION (UPPER LIMIT)
EXTRA ENERGY
TIME
MANAGEMENT CRITERION (LOWER LIMIT)
802
BEFORE ENERGY SAVING MEASURE
[kw]
ELECTRIC POWER
REDUCED ENERGY
T1
TIME
STATUS DATA
MANAGEMENT CRITERION (UPPER LIMIT)
T2
TIME
MANAGEMENT CRITERION (LOWER LIMIT)

FIG. 3

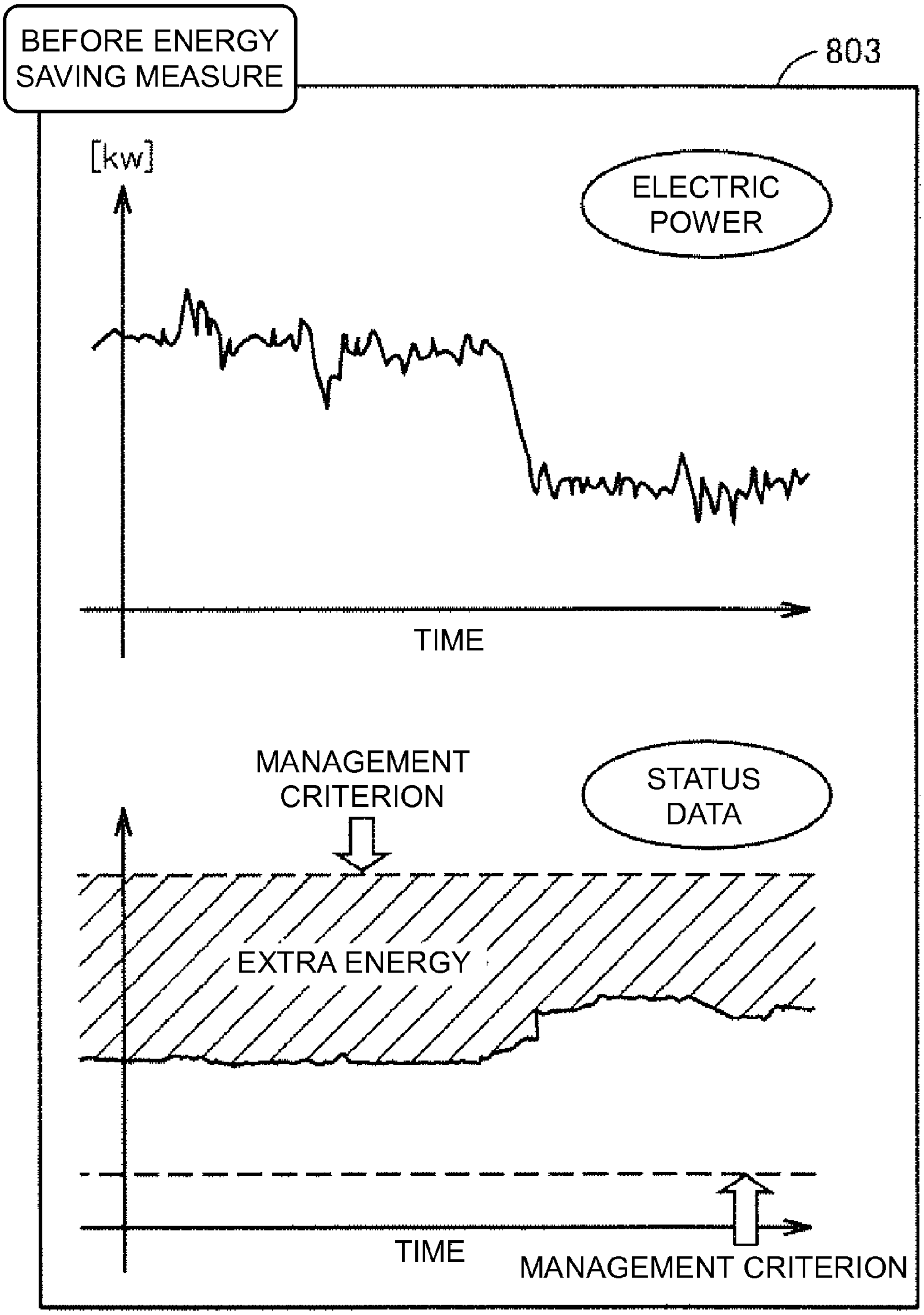
BEFORE ENERGY SAVING MEASURE
803
[kw]
ELECTRIC POWER
TIME
MANAGEMENT CRITERION
STATUS DATA
EXTRA ENERGY
TIME
MANAGEMENT CRITERION

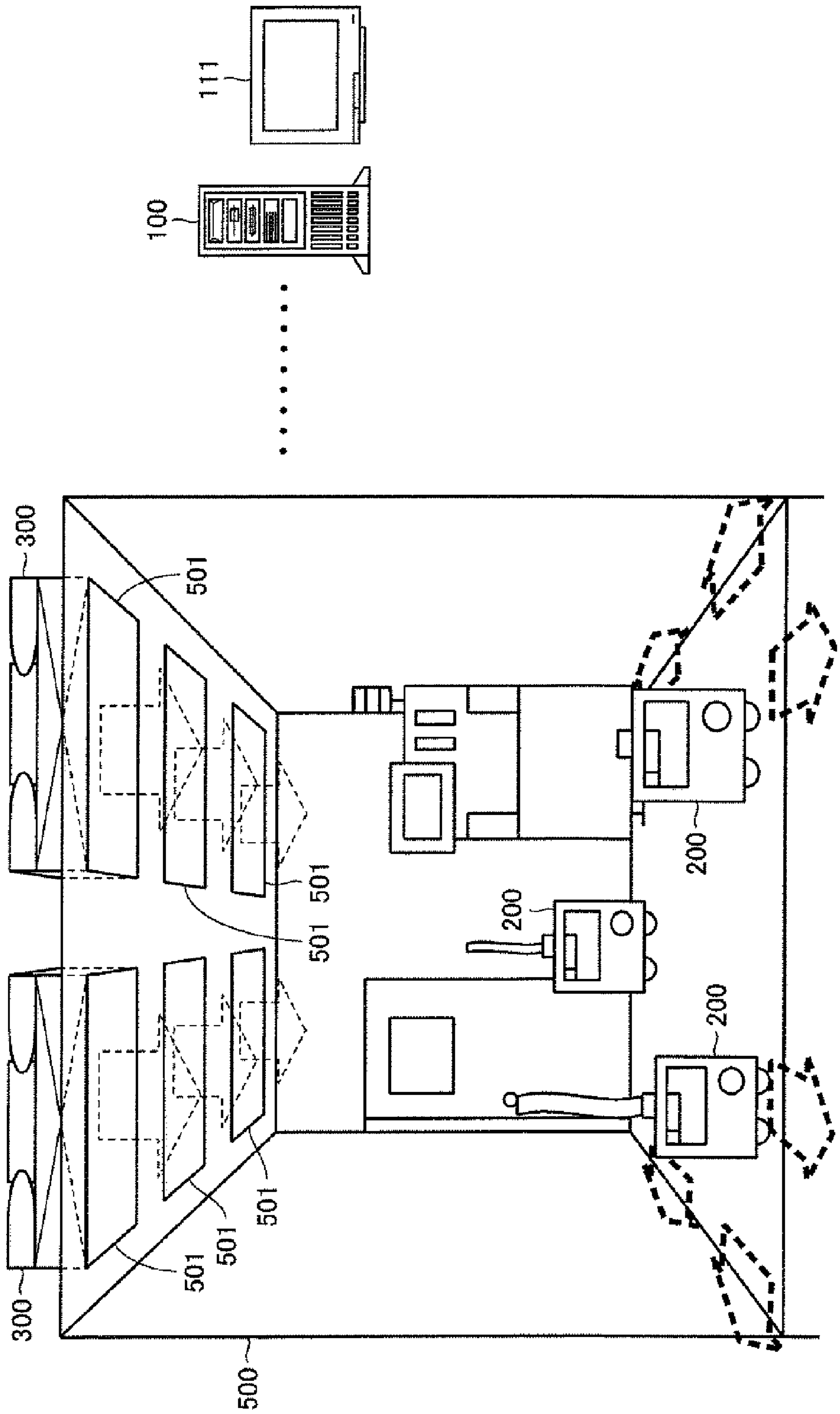


FIG. 4

FIG. 5

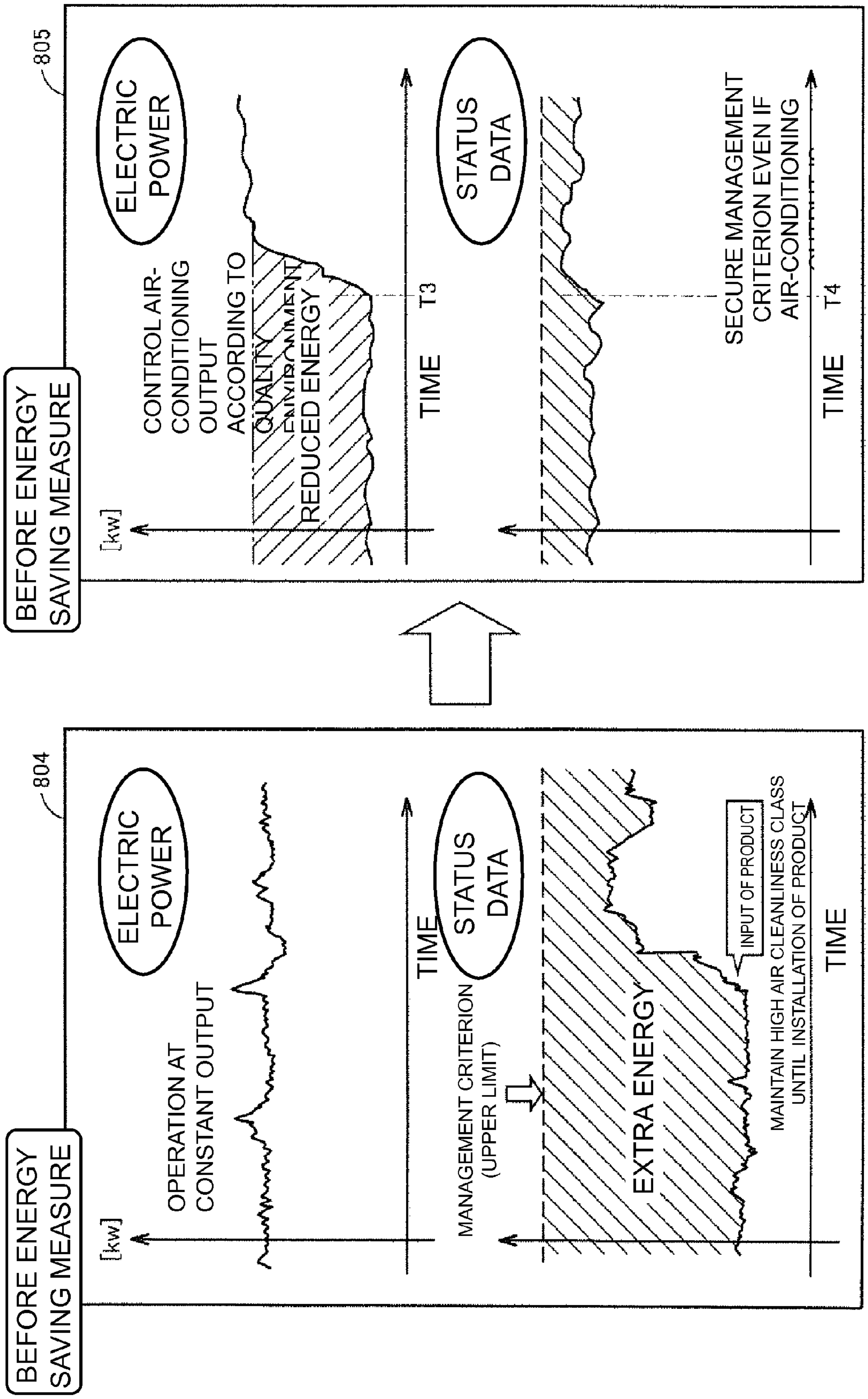
BEFORE ENERGY SAVING MEASURE
804
ELECTRIC POWER
[kw]
OPERATION AT CONSTANT OUTPUT
TIME
STATUS DATA
MANAGEMENT CRITERION (UPPER LIMIT)
EXTRA ENERGY
INPUT OF PRODUCT
MAINTAIN HIGH AIR CLEANLINESS CLASS UNTIL INSTALLATION OF PRODUCT
TIME
BEFORE ENERGY SAVING MEASURE
805
ELECTRIC POWER
[kw]
CONTROL AIR-CONDITIONING OUTPUT ACCORDING TO QUALITY
REDUCED ENERGY
T3
TIME
STATUS DATA
SECURE MANAGEMENT CRITERION EVEN IF AIR-CONDITIONING
T4
TIME

FIG. 6

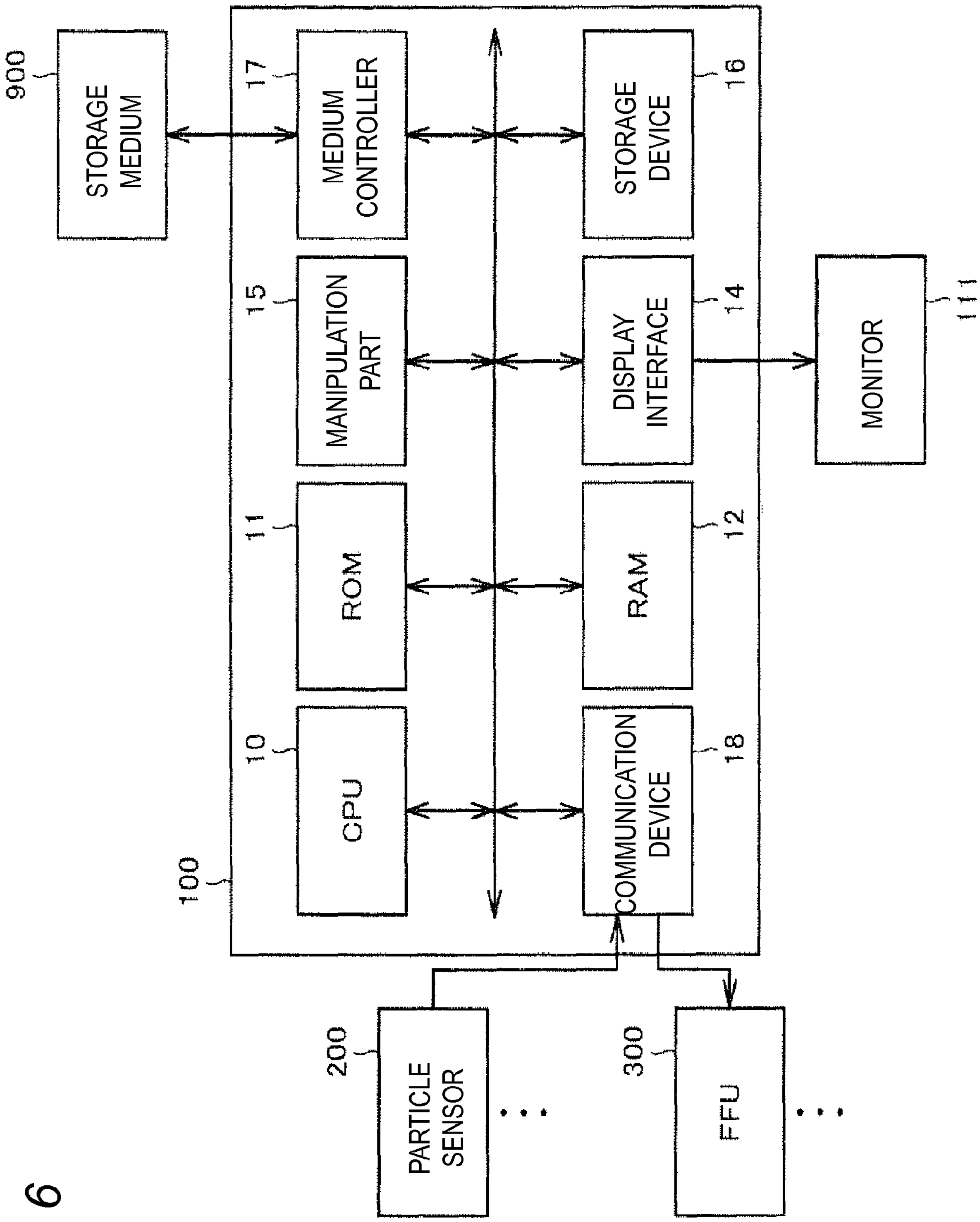
900
STORAGE MEDIUM
17
MEDIUM CONTROLLER
16
STORAGE DEVICE
15
MANIPULATION PART
14
DISPLAY INTERFACE
111
MONITOR
11
ROM
12
RAM
10
CPU
18
COMMUNICATION DEVICE
100
200
PARTICLE SENSOR
300
FFU

FIG. 7

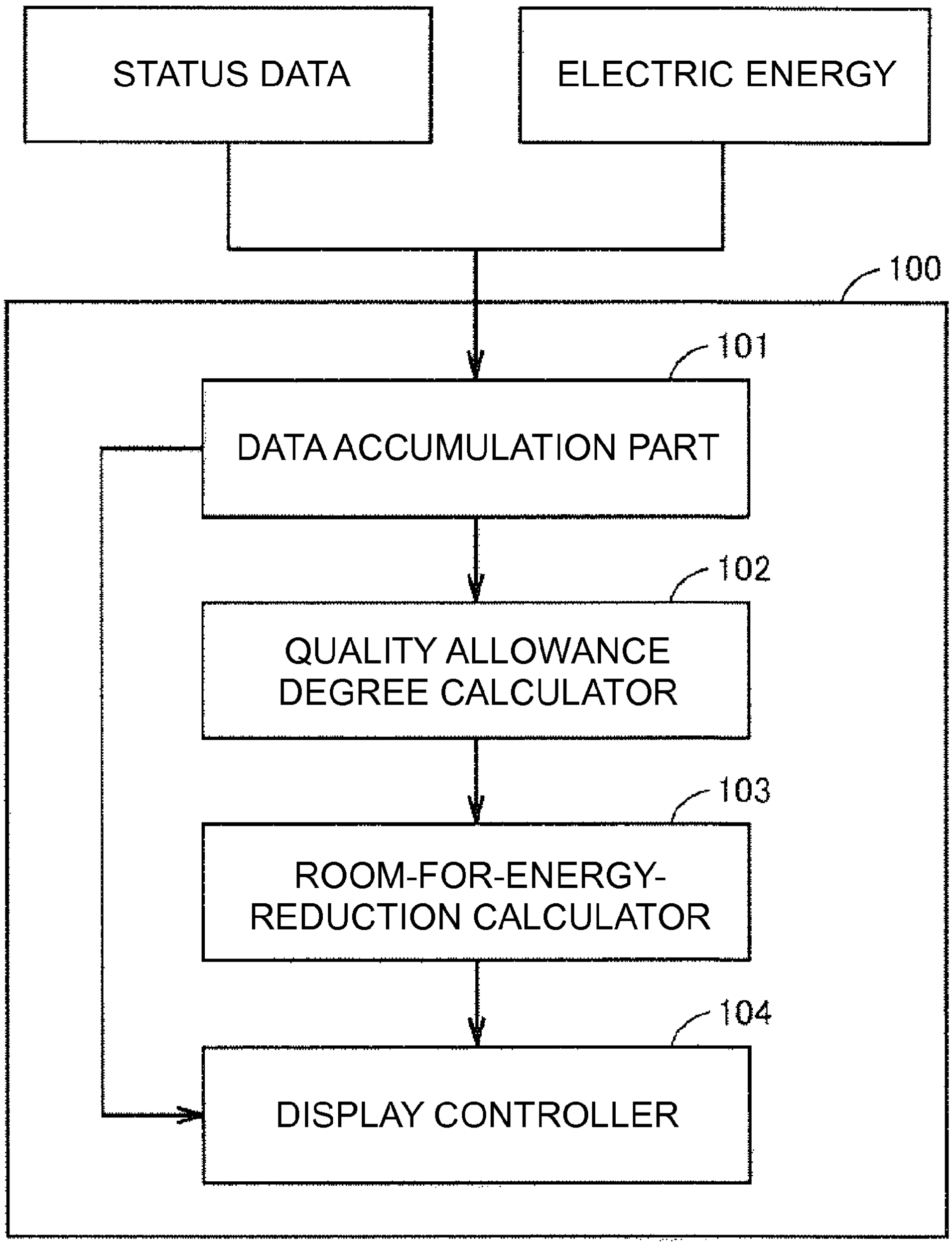
STATUS DATA
ELECTRIC ENERGY
100
101
DATA ACCUMULATION PART
102
QUALITY ALLOWANCE DEGREE CALCULATOR
103
ROOM-FOR-ENERGY-REDUCTION CALCULATOR
104
DISPLAY CONTROLLER

FIG. 8

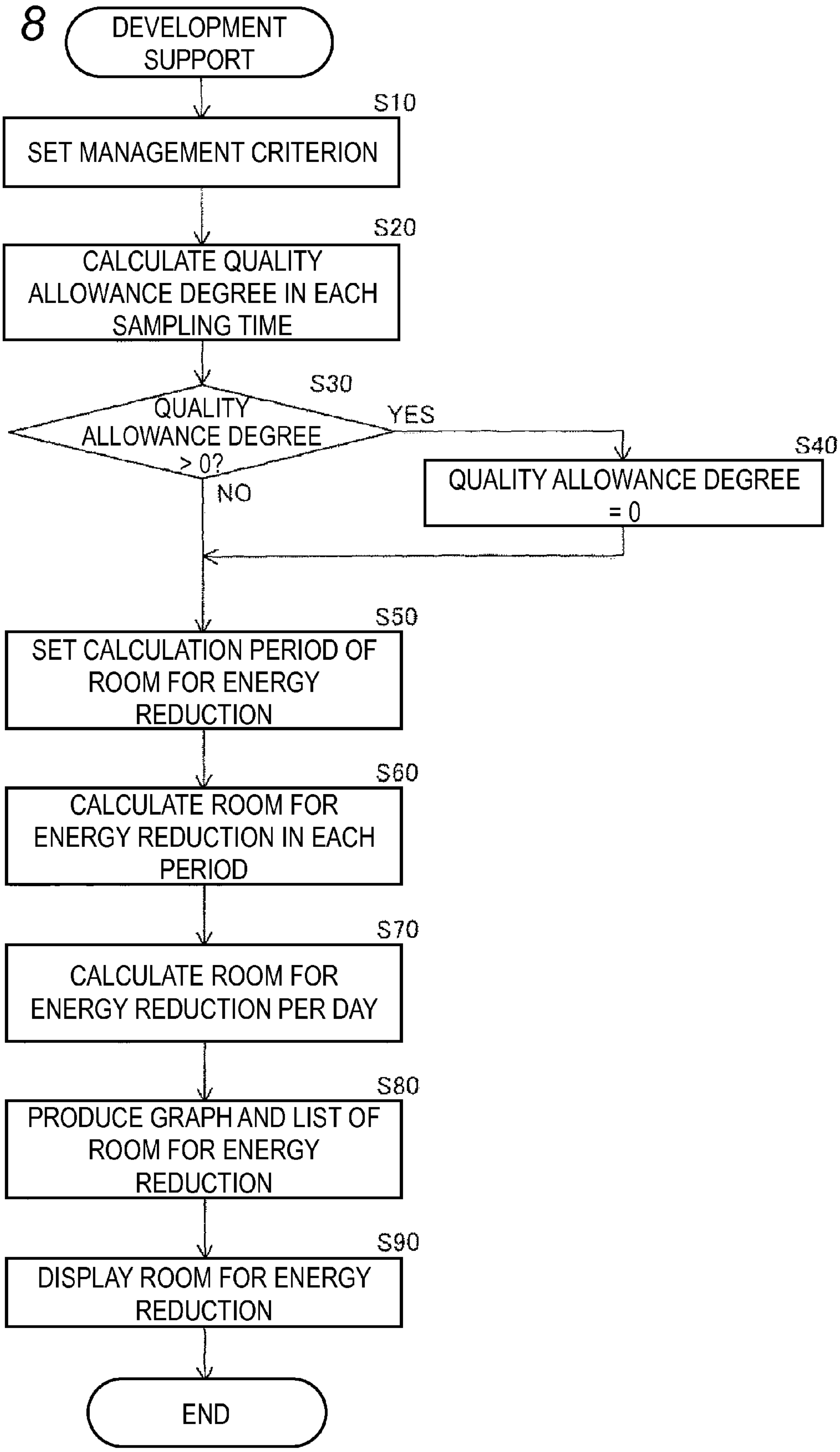
DEVELOPMENT SUPPORT
S10
SET MANAGEMENT CRITERION
S20
CALCULATE QUALITY ALLOWANCE DEGREE IN EACH SAMPLING TIME
S30
QUALITY ALLOWANCE DEGREE > 0?
YES
NO
S40
QUALITY ALLOWANCE DEGREE = 0
S50
SET CALCULATION PERIOD OF ROOM FOR ENERGY REDUCTION
S60
CALCULATE ROOM FOR ENERGY REDUCTION IN EACH PERIOD
S70
CALCULATE ROOM FOR ENERGY REDUCTION PER DAY
S80
PRODUCE GRAPH AND LIST OF ROOM FOR ENERGY REDUCTION
S90
DISPLAY ROOM FOR ENERGY REDUCTION
END

FIG. 9

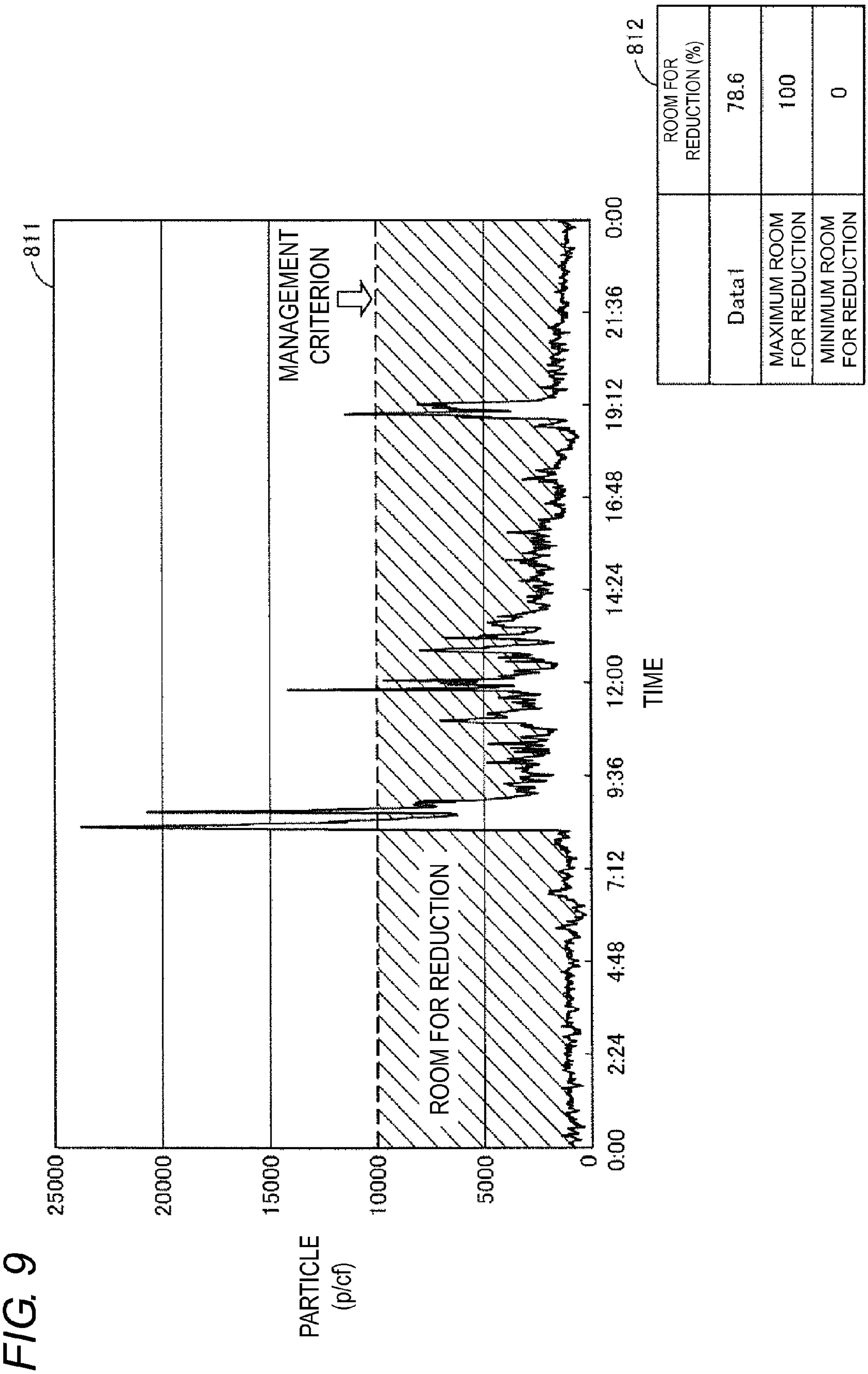
811
PARTICLE (p/cf)
25000
20000
15000
10000
5000
0
0:00
2:24
4:48
7:12
9:36
12:00
14:24
16:48
19:12
21:36
0:00
TIME
MANAGEMENT CRITERION
ROOM FOR REDUCTION
812
ROOM FOR REDUCTION (%)
Data1
78.6
MAXIMUM ROOM FOR REDUCTION
100
MINIMUM ROOM FOR REDUCTION
0

FIG. 10 [ROOM-FOR-ENERGY-REDUCTION LIST]
DATE: 2010/10/26

821

| PROCESS | QUALITY CONTROL VALUE | ROOM FOR REDUCTION (%) |
|---|---|---|
| DIE BONDER | 10000 | 98.8 |
| PLASMA CLEANING | 10000 | 74.2 |
| WIRE BONDER | 10000 | 98.6 |
| MOLD 1 | 100000 | 99.4 |
| MOLD 2 | 100000 | 91.2 |

[DEVICE LAYOUT]

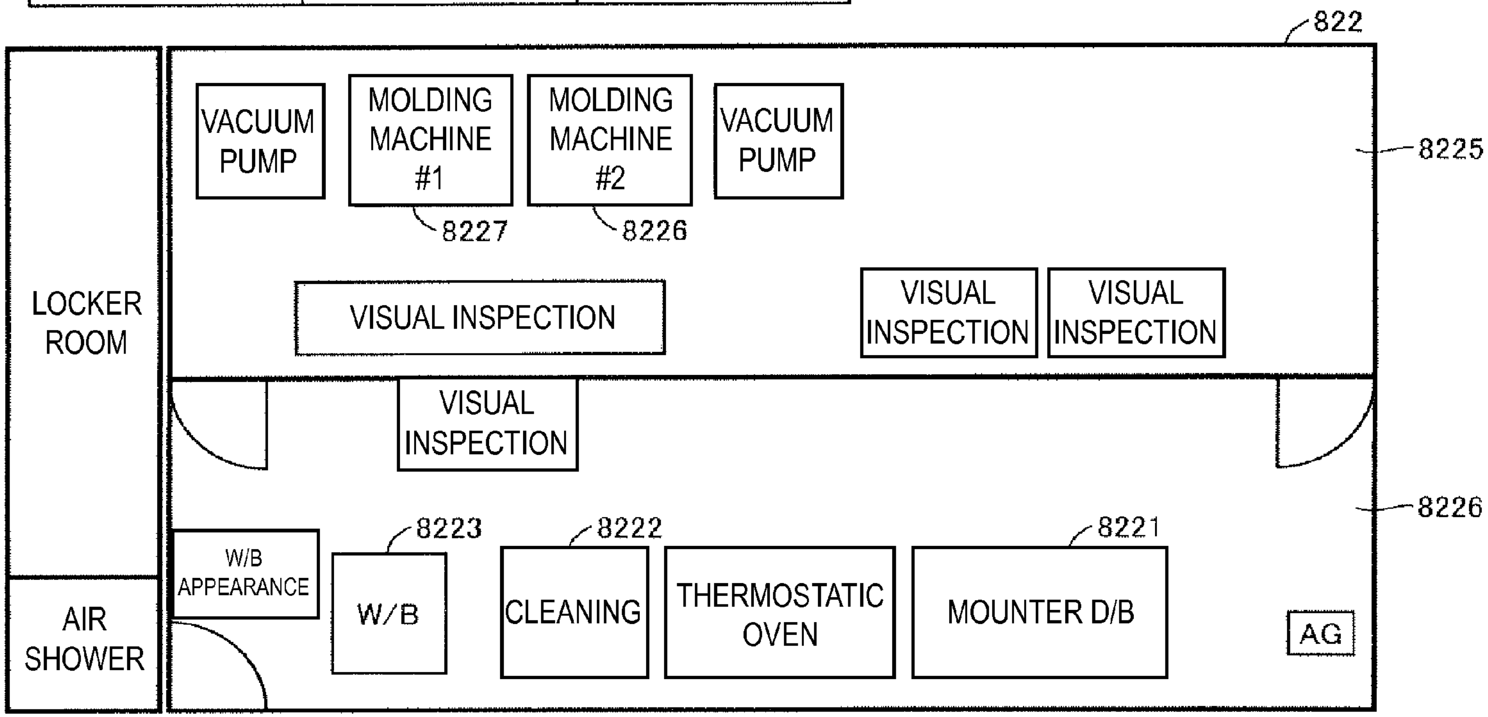

# FIG. 11

(A) PARTICLE MEASURED VALUE

PARTICLE (p/cf)

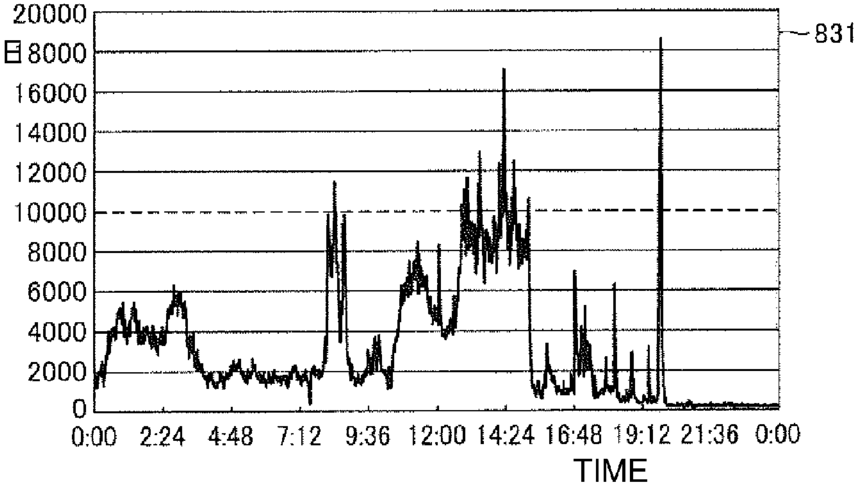


(B) GRAPH OF ROOM FOR ENERGY REDUCTION

ROOM FOR ENERGY REDUCTION (%)

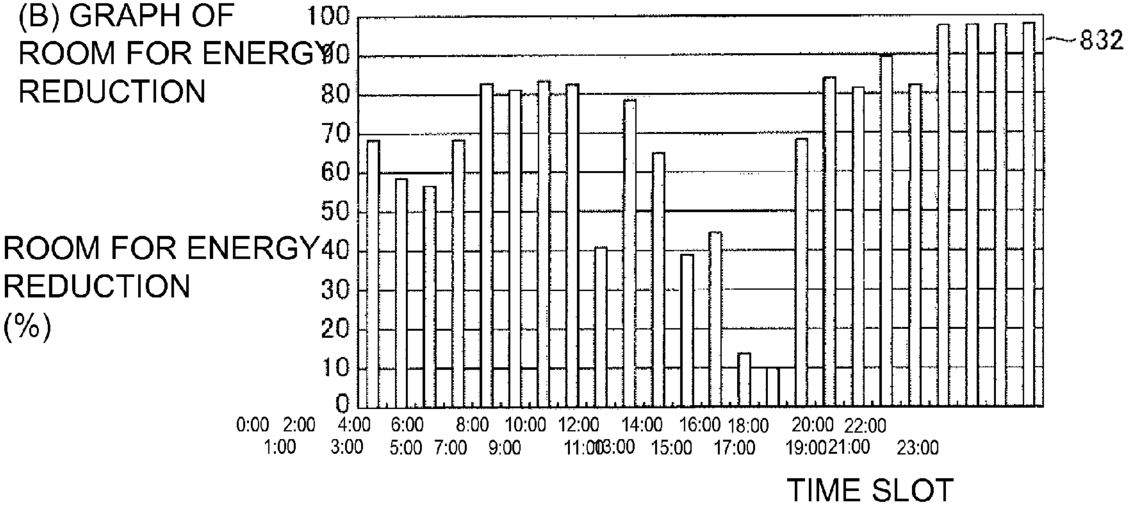


(C) ROOM-FOR-ENERGY

833

| TIME SLOT | ROOM FOR REDUCTION |
|---|---|
| 0:00 | 68.3 |
| 1:00 | 58.4 |
| 2:00 | 56.5 |
| 3:00 | 68.3 |
| 4:00 | 82.7 |
| 5:00 | 81.0 |
| 6:00 | 83.4 |
| 7:00 | 82.5 |
| 8:00 | 40.7 |
| 9:00 | 78.3 |
| 10:00 | 64.7 |
| 11:00 | 38.7 |
| 12:00 | 44.4 |
| 13:00 | 13.6 |
| 14:00 | 10.0 |
| 15:00 | 68.2 |
| 16:00 | 84.0 |
| 17:00 | 81.5 |
| 18:00 | 89.4 |
| 19:00 | 82.1 |
| 20:00 | 97.4 |
| 21:00 | 97.7 |
| 22:00 | 97.6 |
| 23:00 | 97.9 |

FIG. 12

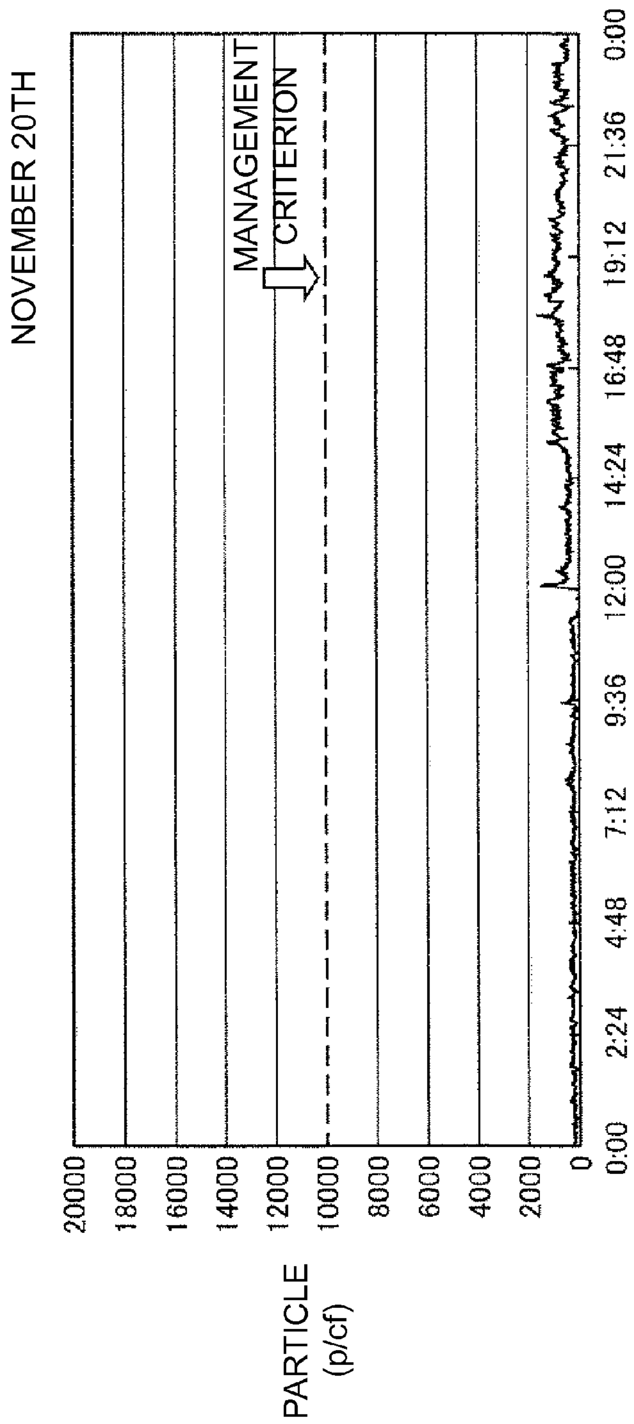
NOVEMBER 20TH
MANAGEMENT CRITERION
PARTICLE (p/cf)
20000
18000
16000
14000
12000
10000
8000
6000
4000
2000
0
0:00
2:24
4:48
7:12
9:36
12:00
14:24
16:48
19:12
21:36
0:00

FIG. 13

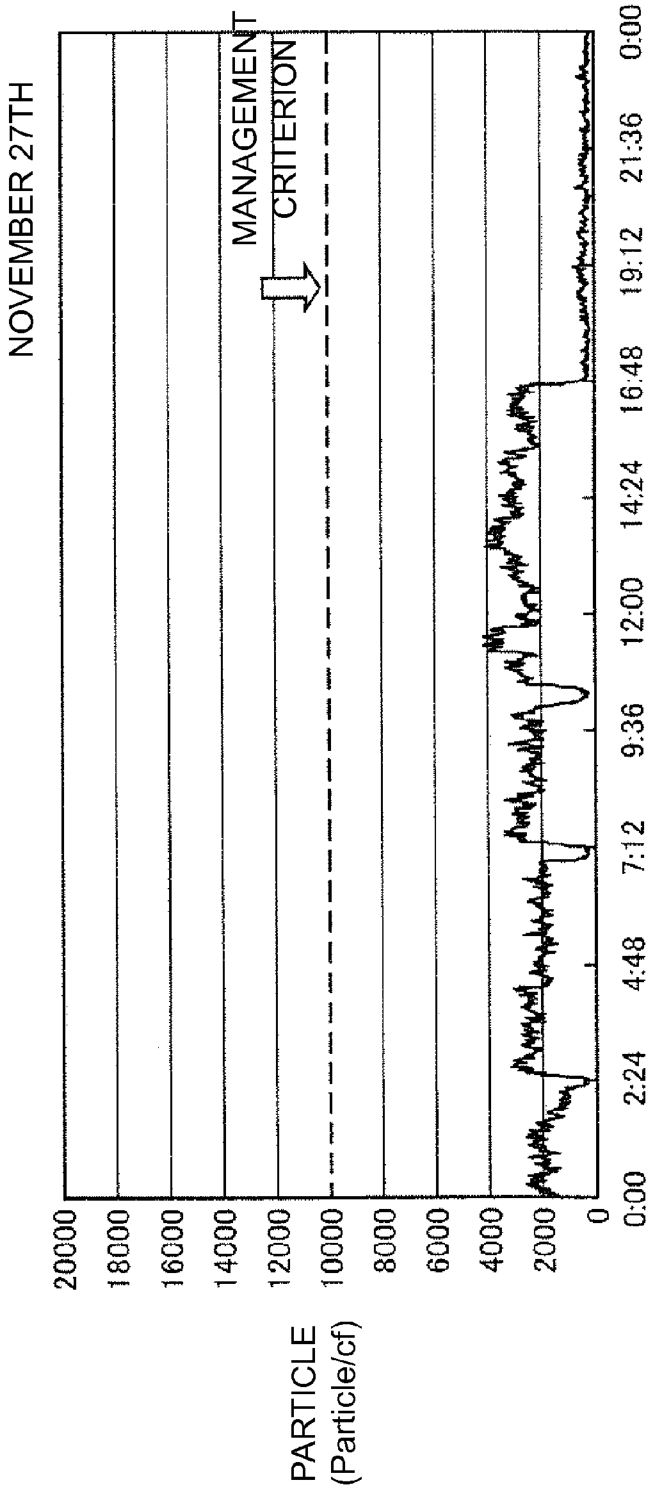
NOVEMBER 27TH
MANAGEMENT CRITERION
PARTICLE (Particle/cf)
20000
18000
16000
14000
12000
10000
8000
6000
4000
2000
0
0:00
2:24
4:48
7:12
9:36
12:00
14:24
16:48
19:12
21:36
0:00

FIG. 14

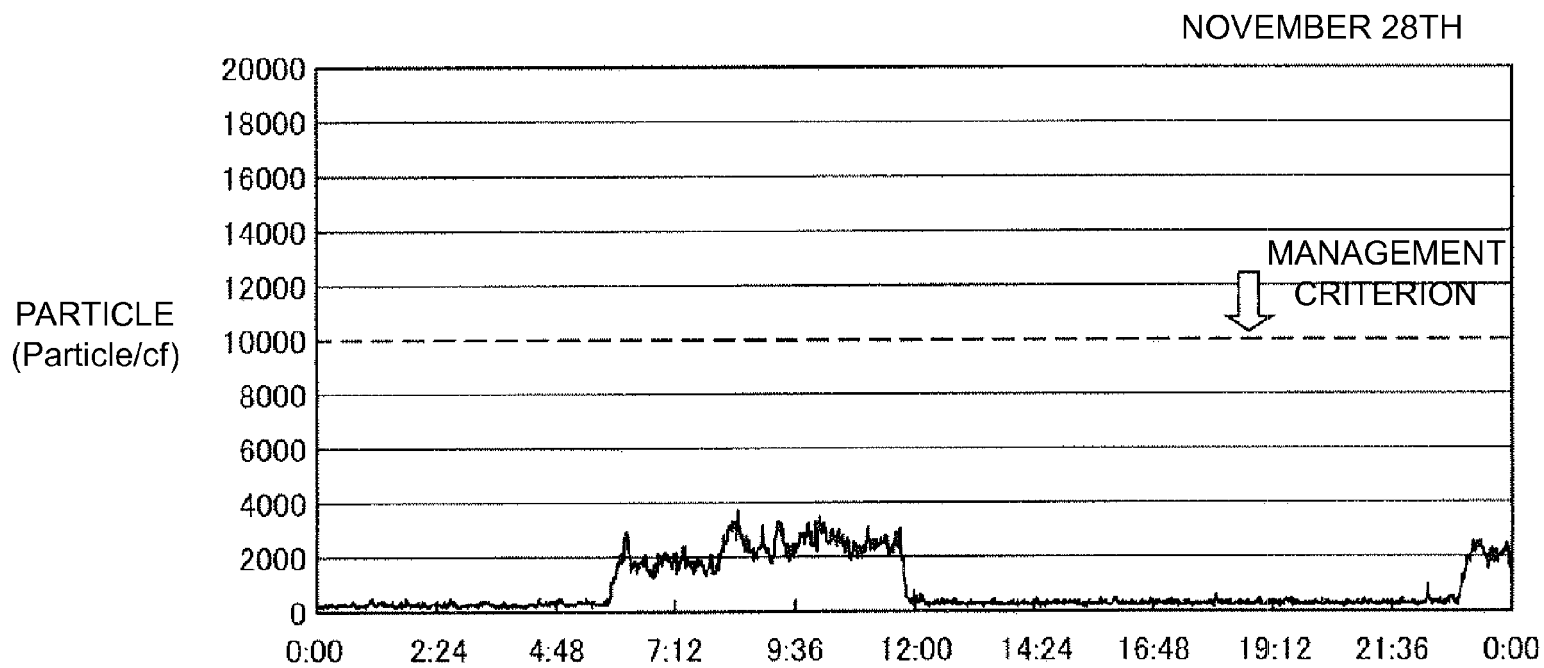
NOVEMBER 28TH
PARTICLE
(Particle/cf)
20000
18000
16000
14000
12000
10000
8000
6000
4000
2000
0
MANAGEMENT
CRITERION
0:00
2:24
4:48
7:12
9:36
12:00
14:24
16:48
19:12
21:36
0:00

*FIG. 15*

| | ROOM-FOR-ENERGY-REDUCTION (%) |
|---|---|
| NOVEMBER 20TH | 84.12 |
| NOVEMBER 27TH | 58.19 |
| NOVEMBER 28TH | 63.17 |

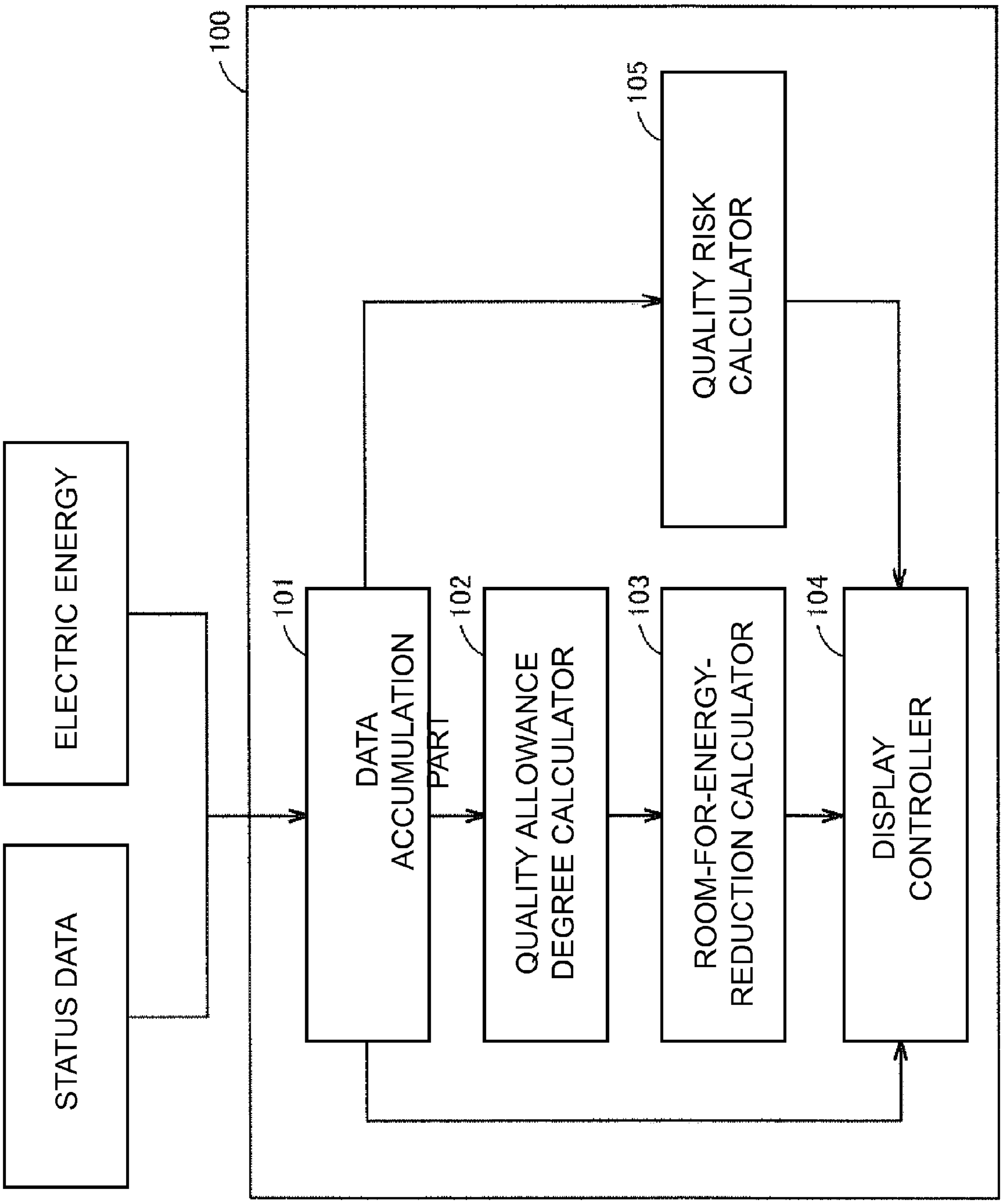
100
105
QUALITY RISK CALCULATOR
ELECTRIC ENERGY
STATUS DATA
101
DATA ACCUMULATION PART
102
QUALITY ALLOWANCE DEGREE CALCULATOR
103
ROOM-FOR-ENERGY-REDUCTION CALCULATOR
104
DISPLAY CONTROLLER

FIG. 16

*FIG. 17*

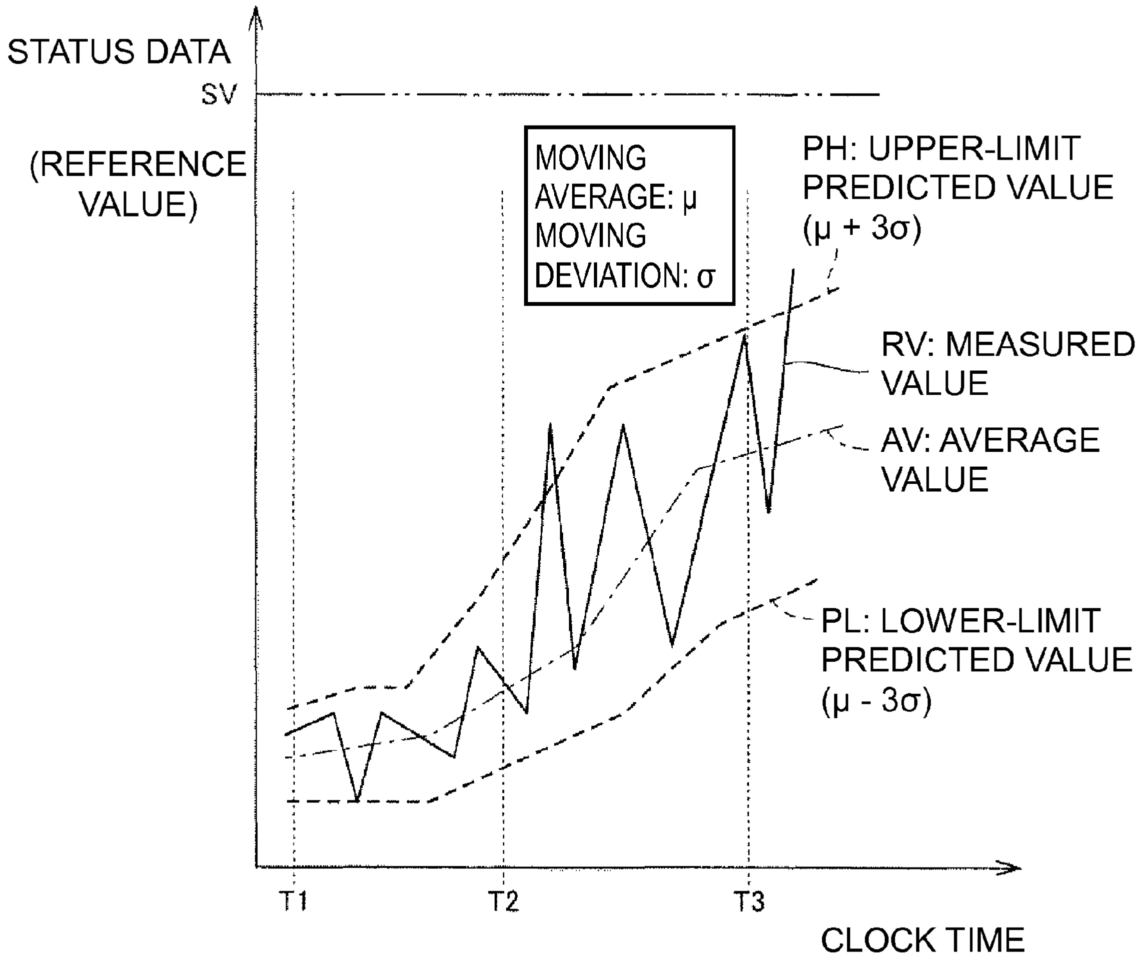
STATUS DATA
SV
(REFERENCE VALUE)
MOVING AVERAGE: μ
MOVING DEVIATION: σ
PH: UPPER-LIMIT PREDICTED VALUE (μ + 3σ)
RV: MEASURED VALUE
AV: AVERAGE VALUE
PL: LOWER-LIMIT PREDICTED VALUE (μ - 3σ)
T1
T2
T3
CLOCK TIME

FIG. 18A

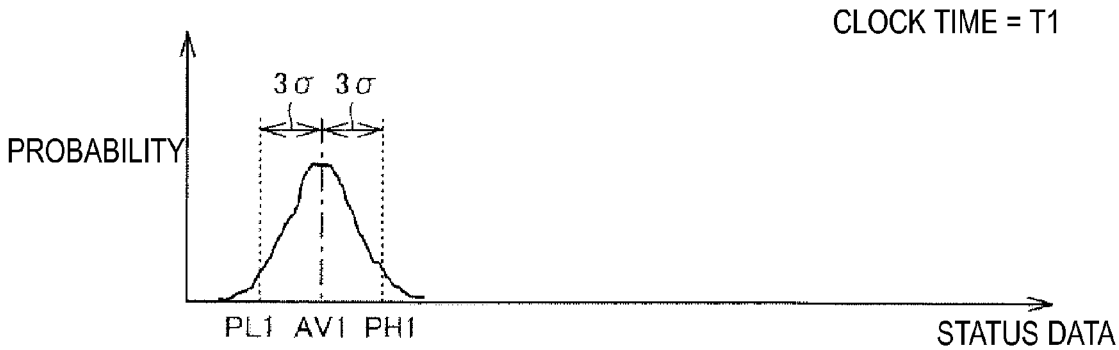


FIG. 18B

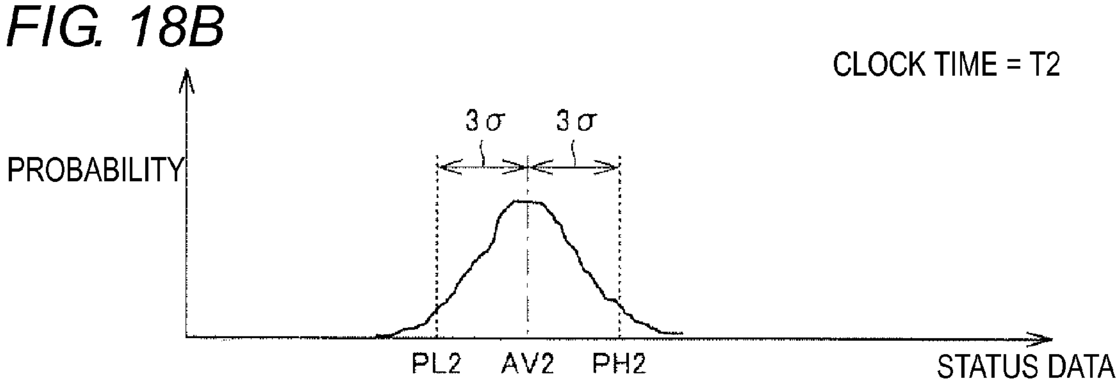


FIG. 18C

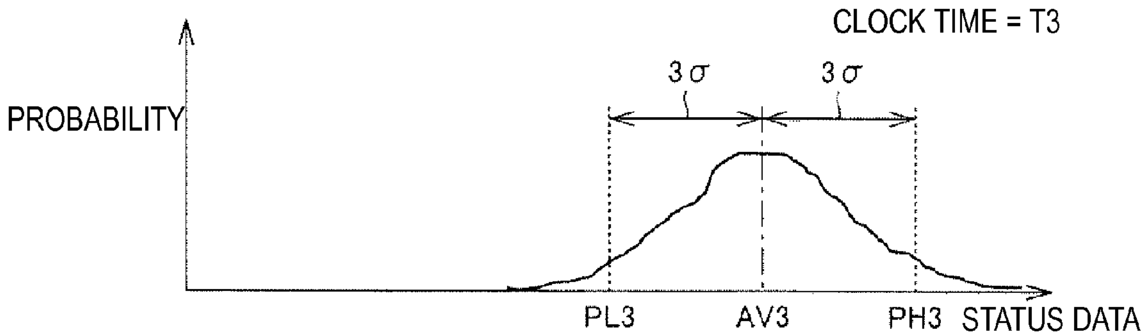

FIG. 19

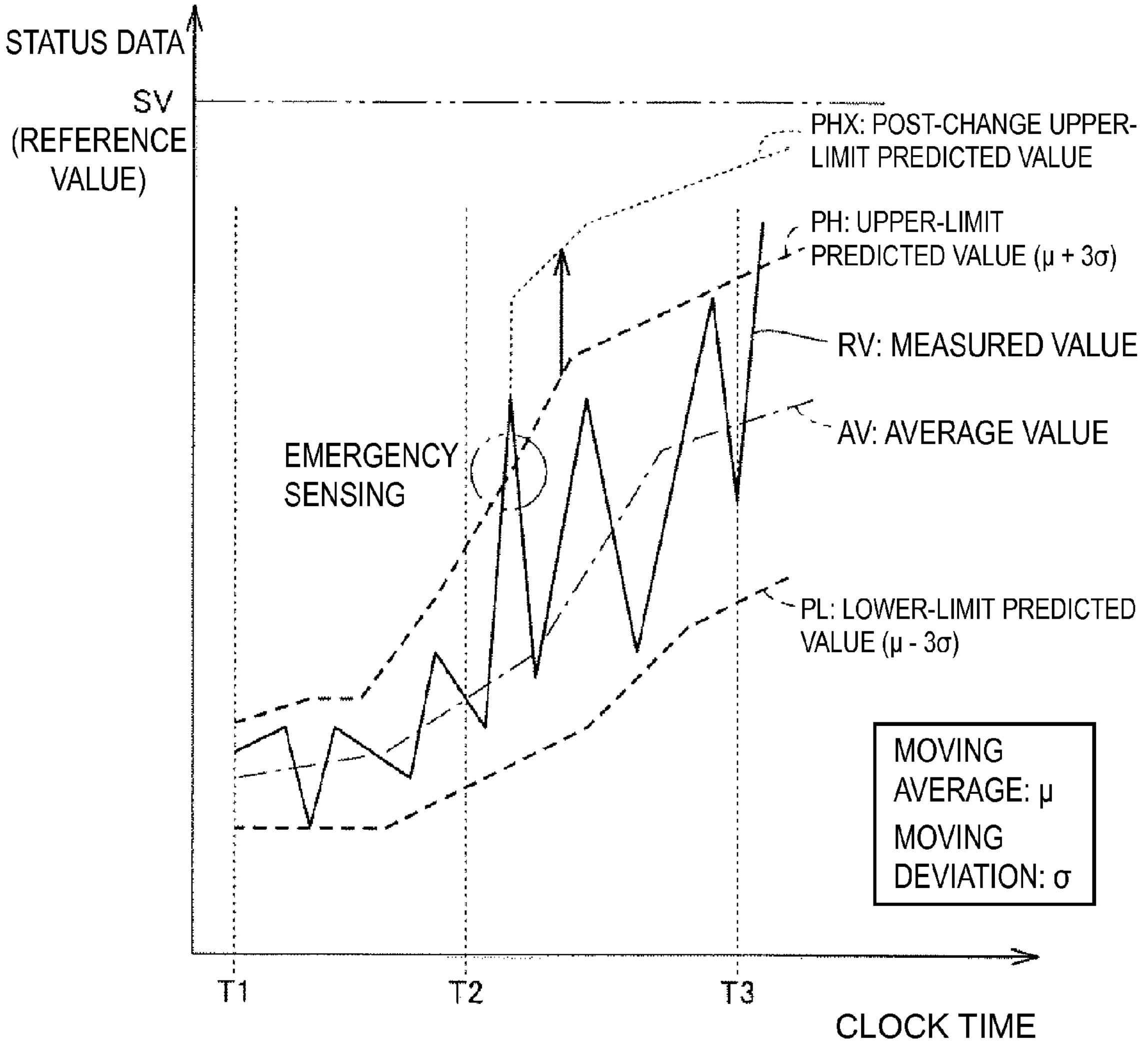
STATUS DATA
SV (REFERENCE VALUE)
PHX: POST-CHANGE UPPER-LIMIT PREDICTED VALUE
PH: UPPER-LIMIT PREDICTED VALUE (μ + 3σ)
RV: MEASURED VALUE
AV: AVERAGE VALUE
EMERGENCY SENSING
PL: LOWER-LIMIT PREDICTED VALUE (μ - 3σ)
MOVING AVERAGE: μ
MOVING DEVIATION: σ
T1
T2
T3
CLOCK TIME

FIG. 20

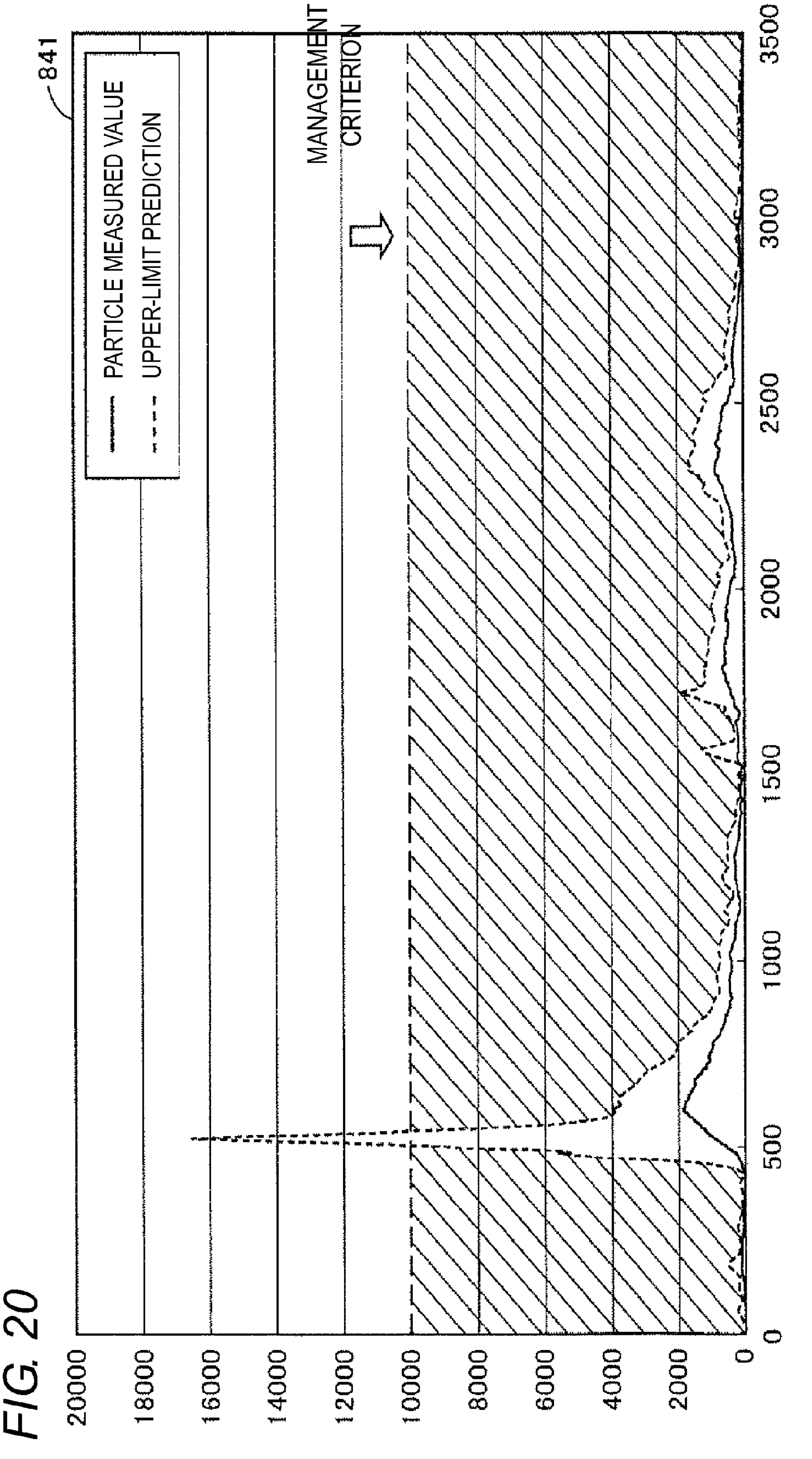


842

| QUALITY RISK (ppm) | ROOM-FOR-ENERGY-REDUCTION (%) |
|---|---|
| 0.573 | 90.83 |

FIG. 21

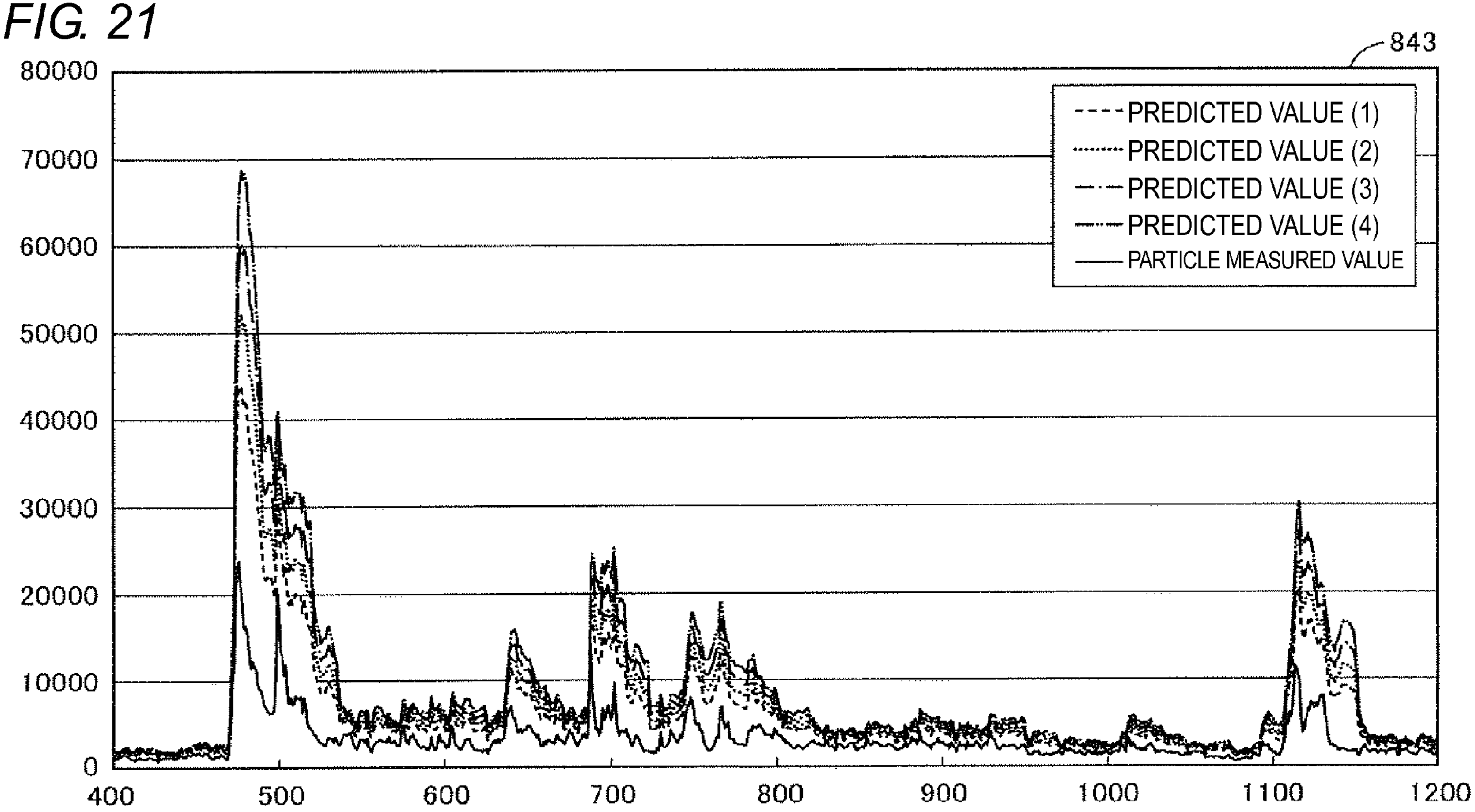


844

| | PREDICTED VALUE (1) | PREDICTED VALUE (2) | PREDICTED VALUE (3) | PREDICTED VALUE (4) |
|---|---|---|---|---|
| ROOM-FOR-ENERGY-REDUCTION (%) | 65.1 | 61.8 | 58.9 | 56.4 |
| QUALITY RISK (ppm) | 2675 | 63.3 | 0.573 | 0.00197 |

FIG. 22

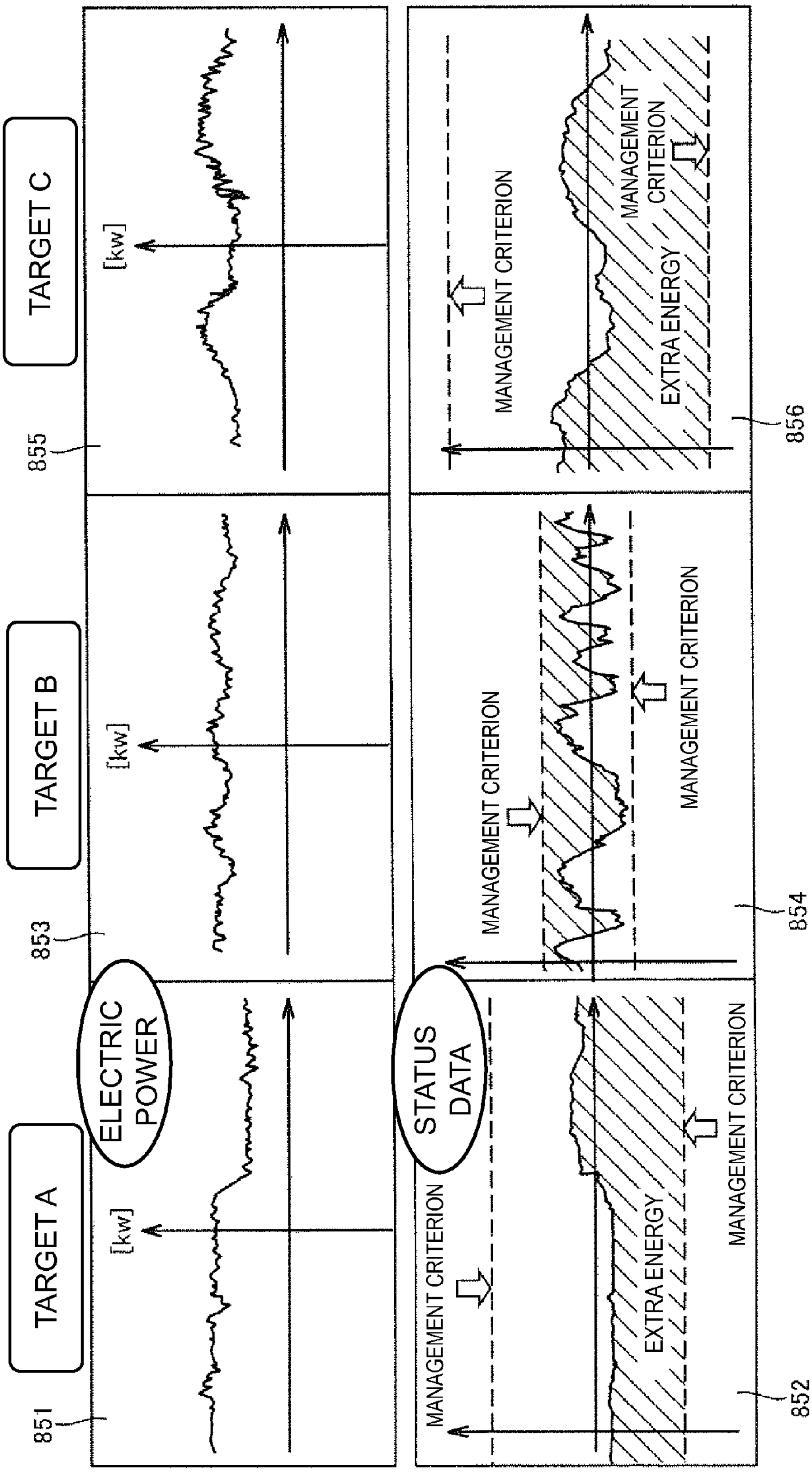


860

[ROOM FOR ENERGY REDUCTION]

| TARGET A | TARGET B | TARGET C |
|---|---|---|
| 50 | 3 | 70 |

FIG. 23

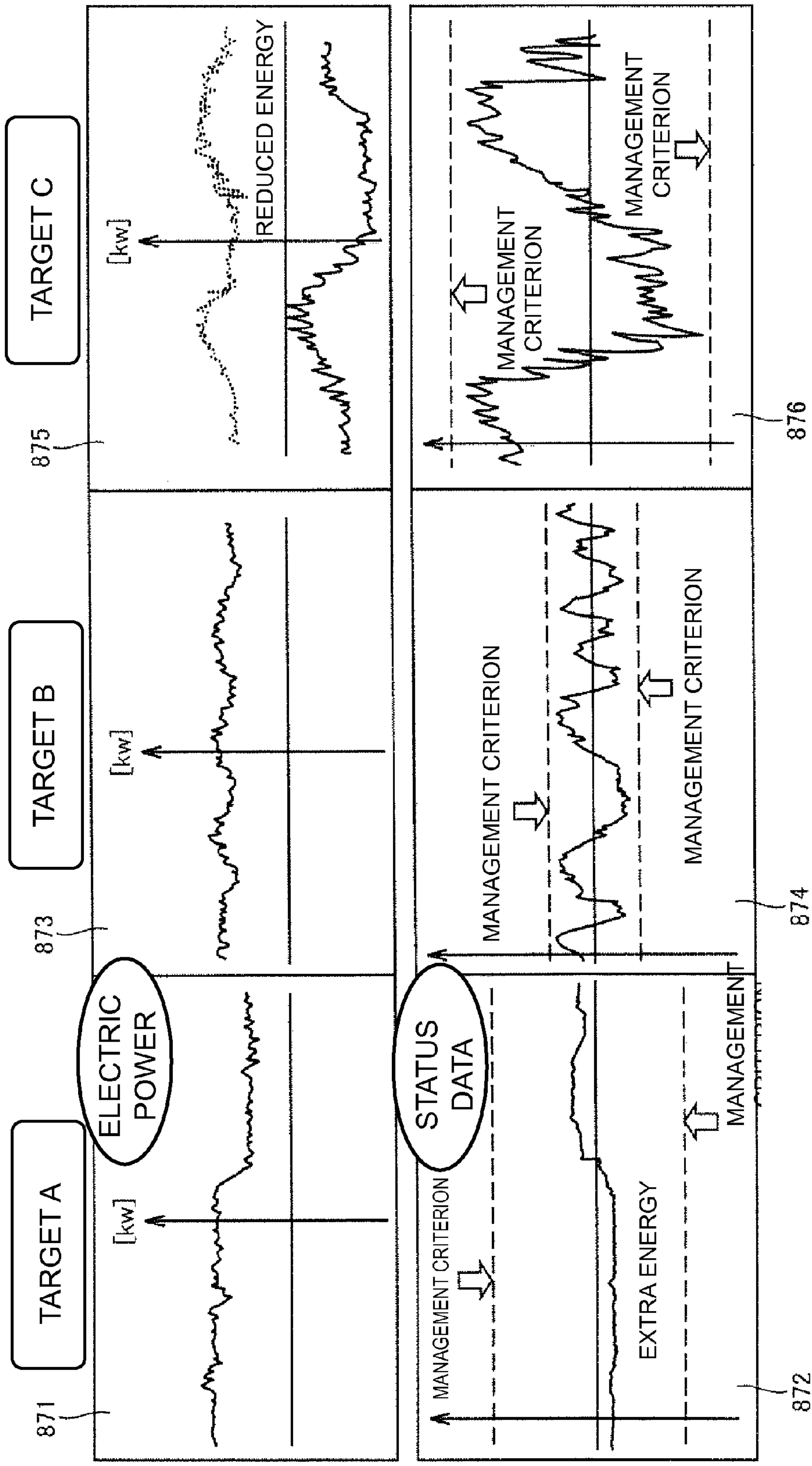
TARGET A
TARGET B
TARGET C
ELECTRIC POWER
STATUS DATA
871
872
873
874
875
876
[kw]
[kw]
[kw]
REDUCED ENERGY
EXTRA ENERGY
MANAGEMENT CRITERION
MANAGEMENT CRITERION
MANAGEMENT CRITERION
MANAGEMENT CRITERION
MANAGEMENT CRITERION

FIG. 24

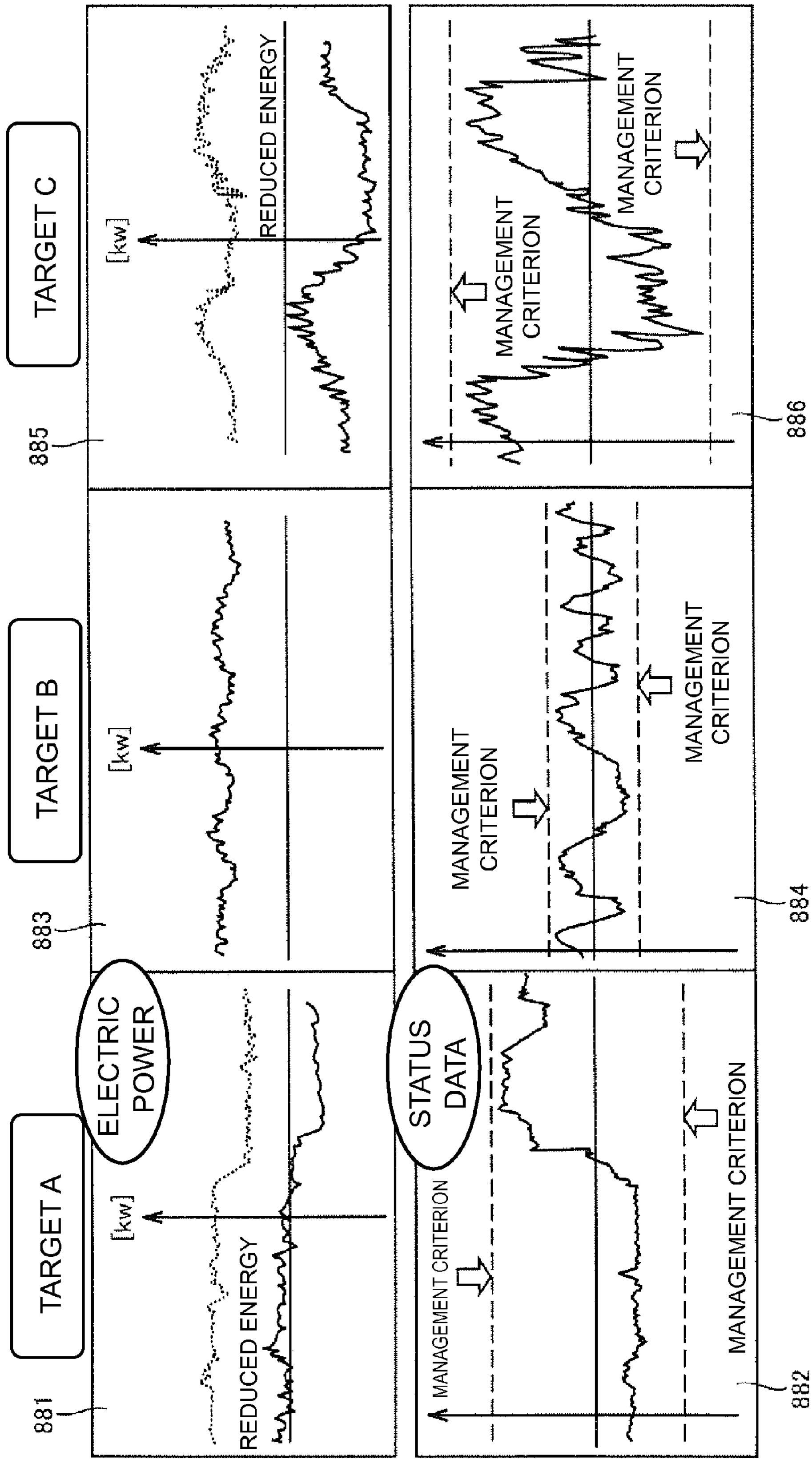

TARGET A
TARGET B
TARGET C
ELECTRIC POWER
STATUS DATA
[kw]
REDUCED ENERGY
MANAGEMENT CRITERION
881
882
883
884
885
886

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008102708 A
- JP 2010250381 A